# EUROPEAN PATENT SPECIFICATION

(11) **EP 4 394 807 B1**
(45) Date of publication and mention of the grant of the patent: **25.11.2026**
(21) Application number: 23777792.5
(22) Date of filing: 09.03.2023
(51) Int. Cl.: H01B 7/282, H01B 7/14, H01B 13/02, H01B 13/14, H01B 13/24, H01B 13/26, H01B 13/32

(54) **SUBMARINE CABLE MANUFACTURING DEVICE AND MANUFACTURING METHOD**
VORRICHTUNG ZUR HERSTELLUNG EINES UNTERWASSERKABELS UND HERSTELLUNGSVERFAHREN
DISPOSITIF DE FABRICATION ET PROCÉDÉ DE FABRICATION DE CÂBLE SOUS-MARIN

(30) Priority: 31.03.2022 CN 202210327640
(43) Date of publication of application: 03.07.2024
(73) Proprietor: Zhongtian Technology Submarine Cable Co., Ltd., Nantong, Jiangsu 226000 (CN)
(72) Inventor: JIN, Xingyu, Nantong, Jiangsu 226000 (CN); DU, Qiang, Nantong, Jiangsu 226000 (CN); FENG, Qiyun, Nantong, Jiangsu 226000 (CN); LIU, Lei, Nantong, Jiangsu 226000 (CN); LIN, Yuexia, Nantong, Jiangsu 226000 (CN); LI, Yeqing, Nantong, Jiangsu 226000 (CN); LIU, Dong, Nantong, Jiangsu 226000 (CN); WENG, Jian, Nantong, Jiangsu 226000 (CN); CHEN, Busheng, Nantong, Jiangsu 226000 (CN); CHEN, Jie, Nantong, Jiangsu 226000 (CN); WANG, Haiyang, Nantong, Jiangsu 226000 (CN); CHEN, Long, Nantong, Jiangsu 226000 (CN); ZHANG, Xuefeng, Nantong, Jiangsu 226000 (CN); LI, Yang, Nantong, Jiangsu 226000 (CN); NIE, Ying, Nantong, Jiangsu 226000 (CN); SUN, Yanyu, Nantong, Jiangsu 226000 (CN); CHEN, Chen, Nantong, Jiangsu 226000 (CN)
(74) Representative: Patentanwalt Paul Rosenich
(86) International application number: PCT/CN2023/080624
(87) International publication number: WO 2023/185414

(56) References cited:
- WO-A1-2018/022237
- CN-A- 102 305 344
- CN-A- 109 390 110
- CN-A- 109 585 064
- CN-A- 109 585 064
- CN-A- 112 792 455
- CN-A- 112 792 455
- CN-A- 113 284 673
- CN-A- 114 420 388
- CN-U- 210 142 528
- CN-U- 215 417 583

## Description

### TECHNICAL FIELD

The present application relates to the field of cable technologies and, in particular, to a submarine cable manufacturing device and a submarine cable manufacturing method.

### BACKGROUND

Submarine cables are wires wrapped in insulating materials and laid on the sea floor and under rivers for telecommunication transmission. The application of submarine cables is becoming wider and wider, especially in ocean engineering, cross-sea communication, wind power grid integration and new energy development, etc. A submarine cable includes an electric unit, an optical unit, a filler, an inner protective layer, an armor layer and an outer protective layer.

In the related art, in order to enable the submarine cable to have better water-blocking performance in complex submarine environment, an aluminum-plastic composite tape and a sheath are selected as a comprehensive water-blocking layer for the electric unit.

CN2018113948087 discloses a method for manufacturing a longitudinal and radial water-blocking medium-voltage power cable which includes the steps of (1) manufacturing wire cores, and (2) manufacturing a cable core, and (3) manufacturing a protective layer.

CN2021100271751 discloses a cable metal composite tape sheath welding method and a cable metal composite tape sheath welding system for welding a metal composite tape sheath of a cable includes driving the metal composite tape to wrap around the wire core to form a sheath; when the length of the metal composite tape is smaller than a preset length, using a tape storage device to store the preset length of the tape and cutting the old tape when replacing it with a new tape reel. Aligning and fixing the two opposite ends of the previous and new tapes, cutting the two opposite ends with a laser, adjusting the distance between the two opposite ends to a proper distance, and then using laser welding to connect the two metal composite tapes.

CN2021217471835 discloses a water-tree-resistant cross-linked polyethylene insulated light submarine cable which includes an outer protection layer, a plurality of conductor cables and optical fibers in the outer protection layer, the conductor cables are arranged in a central symmetry mode, and filling layers are filled among the conductor cables, the optical fibers and the outer protection layer.

However, in the production process of the submarine cable with a long length, there will be a problem that the comprehensive water-blocking layer cannot be produced continuously.

### SUMMARY

The present application provides a submarine cable manufacturing device and a submarine cable manufacturing method, so as to solve the problem that a comprehensive water-blocking layer cannot be produced continuously in a production process of a submarine cable with a long length. The present invention is set out in the appended set of claims.

In one aspect, the present application provides a submarine cable manufacturing device, including a machine set for monofilament drawing, a machine set for water-blocking conductor twisting, a machine set for three-layer co-extrusion, a machine set for semi-conductive wrapping, a machine set for metal shielding wrapping, a machine set for optical fiber compositing and cabling, and a machine set for continuous production of aluminum-plastic composite tapes and sheaths;
the machine set for monofilament drawing and the machine set for water-blocking conductor twisting are configured to produce a water-blocking conductor of a submarine cable; the machine set for three-layer co-extrusion is configured to form a conductor shielding layer, an insulating layer and an insulation shielding layer outside the water-blocking conductor; the machine set for semi-conductive wrapping and the machine set for metal shielding wrapping are configured to sequentially generate a first semi-conductive water-blocking tape wrapping layer, a metal shielding layer and a second semi-conductive water-blocking tape wrapping layer outside the insulation shielding layer;
the machine set for continuous production of aluminum-plastic composite tapes and sheaths includes a first tape dispenser, a second tape dispenser, a welding machine and a tape storage machine, where the first tape dispenser is provided with a first aluminum-plastic composite tape, and the second tape dispenser is provided with a second aluminum-plastic composite tape; the tape storage machine is configured to store the first aluminum-plastic composite tape with a predetermined length in a tape changing process of the first tape dispenser, and the welding machine is configured to weld and connect the first aluminum-plastic composite tape with the predetermined length with the second aluminum-plastic composite tape in a tape connection process of the second tape dispenser;
the machine set for optical fiber compositing and cabling is configured to form the submarine cable.

Optionally, the first tape dispenser includes a first fixing table, a first tape reel and a first magnetic powder brake, where the first tape reel is rotatably installed on the first fixing table, and the first magnetic powder brake is disposed on the first fixing table; the first magnetic powder brake is connected with the first tape reel, and the first aluminum-plastic composite tape is wrapped around the first tape reel; and the first magnetic powder brake is configured to make the first aluminum-plastic composite tape maintain a predetermined tension after being released;
the second tape dispenser includes a second fixing table, a second tape reel and a second magnetic powder brake, where the second tape reel is rotatably installed on the second fixing table, and the second magnetic powder brake is disposed on the second fixing table; the second magnetic powder brake is connected with the second tape reel, and the second aluminum-plastic composite tape is wrapped around the second tape reel; and the second magnetic powder brake is configured to make the second aluminum-plastic composite tape maintain a predetermined tension after being released.

Optionally, the first tape dispenser further includes a first guide wheel and a first guide wheel holder, where the first guide wheel holder is fixed on the first fixing table, and the first guide wheel is installed on the first guide wheel holder; the first guide wheel is located in a releasing direction of the first aluminum-plastic composite tape, and the first guide wheel is configured to make the first aluminum-plastic composite tape be positioned below the water-blocking conductor with the second semi-conductive water-blocking tape wrapping layer after being released;
the second tape dispenser further includes a second guide wheel and a second guide wheel holder, where the second guide wheel holder is fixed on the second fixing table, and the second guide wheel is installed on the second guide wheel holder; the second guide wheel is located in a releasing direction of the second aluminum-plastic composite tape, and the second guide wheel is configured to make the second aluminum-plastic composite tape be positioned below the water-blocking conductor with the second semi-conductive water-blocking tape wrapping layer after being released.

Optionally, the machine set for continuous production of aluminum-plastic composite tapes and sheaths further includes a longitudinal wrapping machine, an extruder, a cooling water tank, a tractor and a take-up frame;
the longitudinal wrapping machine is configured to synchronously form an aluminum-plastic composite tape layer outside the second semi-conductive water-blocking tape wrapping layer; the extruder is configured to synchronously extrude a sheath layer after the longitudinal wrapping machine; the cooling water tank is configured to cool the sheath layer; the tractor is configured to tow the water-blocking conductor with the aluminum-plastic composite tape layer and the sheath layer to the take-up frame.

Optionally, the longitudinal wrapping machine includes a longitudinal wrapping platform, a longitudinal wrapping mold and a hot melt adhesive machine, where the longitudinal wrapping mold is fixed on the longitudinal wrapping platform, the first aluminum-plastic composite tape or the second aluminum-plastic composite tape is threaded into the longitudinal wrapping mold, and the hot melt adhesive machine is disposed at an exit of the longitudinal wrapping mold.

Optionally, the longitudinal wrapping machine further includes a tape-guiding wheel and a cable-guiding wheel, where the tape-guiding wheel and the cable-guiding wheel are fixed on the longitudinal wrapping platform, and are located at an entrance of the longitudinal wrapping mold, where the tape-guiding wheel is configured to make the first aluminum-plastic composite tape or the second aluminum-plastic composite tape extend in an extension direction of the longitudinal wrapping mold, and the cable-guiding wheel is configured to make the water-blocking conductor with the second semi-conductive water-blocking tape wrapping layer extend in the extension direction of the longitudinal wrapping mold.

Optionally, the cooling water tank includes four water tanks, where the four water tanks are configured to sequentially cool the sheath layer, and temperatures of the four water tanks are 50~60°C, 35~45°C, 20~30°C and 5~15°C, respectively.

Optionally, the tape storage machine includes tape storage wheels, a tape storage box, and tension wheels, where the tape storage box is provided with an accommodating cavity; the tape storage wheels are installed close to an end of the tape storage box at which the first aluminum-plastic composite tape enters the tape storage box; the tension wheels are installed close to an end of the tape storage box at which the first aluminum-plastic composite tape leaves the tape storage box; the tape storage wheels are configured to store the first aluminum-plastic composite tape of the predetermined length in the accommodating cavity in the tape changing process of the first tape dispenser, and the tension wheels are configured to provide the first aluminum-plastic composite tape to the longitudinal wrapping machine in the tape changing process of the first tape dispenser.

Optionally, the tape storage machine further includes an adjusting rod, where the adjusting rod is disposed in the accommodating cavity, and the adjusting rod is configured to adjust a distance between two side plates of the tape storage box in a width direction of the first aluminum-plastic composite tape.

Optionally, the machine set for metal shielding wrapping includes a metal wire frame twisting machine, where the metal wire frame twisting machine includes a metal wire frame twisting machine body, a metal wire forming mold and a metal wire uniform distribution assembly; the metal wire uniform distribution assembly is located between the metal wire frame twisting machine body and the metal wire forming mold, the metal wire uniform distribution assembly is fixed on the metal wire frame twisting machine body, and the metal wire uniform distribution assembly is configured to uniformly distribute a plurality of metal wires in a circumferential direction;
the metal wire uniform distribution assembly includes threading modules, a circular wire distribution disc and oil-free bushings;
the number of the threading modules is set corresponding to the number of the metal wires, where each threading module is provided with a threading hole for a metal wire to pass through, each threading hole is provided with an embedded oil-free bushing, and the threading modules are uniformly fixed on the circular wire distribution disc along a circular direction of the circular wire distribution disc.

In another aspect, the present application provides a submarine cable manufacturing method, including the following steps:
forming a water-blocking conductor;
forming the water-blocking conductor with a conductor shielding layer, an insulating layer and an insulation shielding layer;
forming the water-blocking conductor with a first semi-conductive water-blocking tape wrapping layer, a metal shielding layer and a second semi-conductive water-blocking tape wrapping layer;
forming the water-blocking conductor with an aluminum-plastic composite tape layer and a sheath layer;
forming a submarine cable;
where the manufacturing method is implemented by adopting the submarine cable manufacturing device as described above.

Optionally, the water-blocking conductor is formed by twisting a semi-conductive water-blocking tape and a plurality of soft copper wires, and cross-sectional area of the water-blocking conductor is 50~500mm².

Optionally, the first semi-conductive water-blocking tape wrapping layer and the second semi-conductive water-blocking tape wrapping layer are both composed of a single-layer overlapping wrapping semi-conductive water-blocking layer, where a wrapping direction of the first semi-conductive water-blocking tape wrapping layer and a wrapping direction of the second semi-conductive water-blocking tape wrapping layer are the same, a thicknesses of the first semi-conductive water-blocking tape wrapping layer and a thicknesses of the second semi-conductive water-blocking tape wrapping layer are both 0.5~1mm, and a covering rate of the first semi-conductive water-blocking tape wrapping layer and a covering rate of the second semi-conductive water-blocking tape wrapping layer are both not less than 20%.

Optionally, the metal shielding layer includes a metal wire shielding layer and a metal tape shielding layer, where the metal wire shielding layer adopts a metal wire wrapped around an outer side of the first semi-conductive water-blocking tape wrapping layer, and the metal tape shielding layer adopts a metal tape wrapped around an outer side of the metal wire shielding layer with a gap;
a wrapping direction of the metal wire shielding layer is the same as a wrapping direction of the metal tape shielding layer, and the wrapping direction of the metal wire shielding layer is opposite to the wrapping direction of the first semi-conductive water-blocking wrapping tape; a winding pitch of the metal wire shielding layer is 10~12 times of an outer diameter of a cable core of the submarine cable, and a gap width of the metal tape shielding layer is 2~5 times of a width of the metal tape.

Optionally, the sheath layer includes an insulating polyethylene sheath layer and a semi-conductive polyethylene sheath layer, where the insulating polyethylene sheath layer is extruded outside the aluminum-plastic composite tape layer, and the semi-conductive polyethylene sheath layer is extruded outside the insulating polyethylene sheath layer, where a thickness of the semi-conductive polyethylene sheath layer is 0.5~1mm.

The present application provides the submarine cable manufacturing device and submarine cable manufacturing method. The continuous production of aluminum-plastic composite tapes and sheaths can be realized through the machine set for continuous production of aluminum-plastic composite tapes and sheaths, and a problem of tape breakage of the aluminum-plastic composite tape layer in the production process is avoided.

### BRIEF DESCRIPTION OF DRAWINGS

In order to explain technical solutions of embodiments of the present application or in the prior art more clearly, the drawings needed in the description of the embodiments or the prior art will be briefly introduced below. Obviously, the drawings described in the following are some embodiments of the present application, and other drawings can be obtained by those skilled in the art according to these drawings without any creative efforts.
FIG. 1 is a schematic structural diagram of a submarine cable provided by an embodiment of the present application.
FIG. 2 is a schematic structural diagram of an electric unit in the submarine cable provided in FIG. 1.
FIG. 3 is a structural block diagram of a submarine cable manufacturing device provided by an embodiment of the present application.
FIG. 4 is a schematic structural diagram of an application of a machine set for continuous production of aluminum-plastic composite tapes and sheaths in the submarine cable manufacturing device provided in FIG. 3.
FIG. 5 is a schematic structural diagram of a metal wire frame twisting machine of a machine set for metal shielding wrapping in FIG. 3.
FIG. 6 is a schematic structural diagram of a metal wire uniform distribution assembly of the metal wire frame twisting machine in FIG. 5.
FIG. 7 is a schematic structural diagram of another state of the metal wire uniform distribution assembly in FIG. 6.
FIG. 8 is a schematic structural diagram of a threading module of the metal wire uniform distribution assembly in FIG. 6.
FIG. 9 is a structural block diagram of a submarine cable manufacturing method provided by an embodiment of the present application.

### Reference signs:

10- electric unit; 20- optical unit; 30- filler; 40- tape wrapping layer; 50- inner protective layer; 60- armor layer; 70- outer coating layer; 11- water-blocking conductor; 12-conductor shielding layer; 13- insulating layer; 14- insulation shielding layer; 15- first semi-conductive water-blocking tape wrapping layer; 16- metal shielding layer; 161- metal wire shielding layer; 162- metal tape shielding layer; 17- second semi-conductive water-blocking tape wrapping layer; 18- aluminum-plastic composite tape layer; 19- sheath layer; 191- insulating polyethylene sheath layer; 192- semi-conductive polyethylene sheath layer;
1- machine set for monofilament drawing; 2- machine set for water-blocking conductor twisting; 3- machine set for three-layer co-extrusion; 4- machine set for semi-conductive wrapping; 5- machine set for metal shielding wrapping; 6- machine set for continuous production of aluminum-plastic composite tapes and sheaths; 7- machine set for optical fiber compositing and cabling; 61- first tape dispenser; 62- second tape dispenser ; 64-welding machine; 63- tape storage machine; 65- longitudinal wrapping machine; 611- first aluminum-plastic composite tape; 621- second aluminum-plastic composite tape;
612- first fixing table; 613- first tape reel; 614- first magnetic powder brake; 615-first guide wheel; 616- first guide wheel holder; 622- second fixing table; 623- second tape reel; 624- second magnetic powder brake; 625- second guide wheel; 626- second guide wheel holder; 631- tape storage wheel; 632- tape storage box; 633- tension wheel; 634- adjusting rod; 651- longitudinal wrapping platform; 652- longitudinal wrapping mold; 653- hot melt adhesive machine; 654- tape-guiding wheel; 655- cable-guiding wheel; 66- extruder; 67-cooling water tank; 68- tractor; 69- take-up frame;
51- metal wire frame twisting machine; 511- metal wire frame twisting machine body; 512- metal wire forming mold; 513- metal wire uniform distribution assembly; 5131-threading module; 5132- circular wire distribution disc; 5133- oil-free bushing; 5141-threading block; 5142- clamping block; 5143- threading hole; 5144- scale line; 5145- outer slide rail; 5146- inner slide rail; 5147- outer fixing threaded hole; 5148- inner fixing threaded hole; 5149- wire distribution disc fixing threaded hole.

### DESCRIPTION OF EMBODIMENTS

In order to make the purposes, technical solutions and advantages of embodiments of the present application clearer, the technical solutions in the embodiments of the present application will be described clearly and completely with the accompanying drawings, and obviously, the described embodiments are a part of the embodiments of the present application, but not all the embodiments. Based on the embodiments in the present application, all other embodiments obtained by those skilled in the art without creative efforts belong to the protection scope of the present application.

It should be noted that, the terms "first" and "second" are only used for descriptive purposes, and cannot be understood as indicating or implying relative importance or implicitly indicating the number of indicated technical features. Therefore, a feature defined with "first" or "second" can explicitly or implicitly include at least one such feature. In the description of the present application, "plurality" means at least two, such as two, three, etc., unless otherwise specifically defined.

In the present application, unless otherwise specifically stated and defined, the terms "install", "connect", "fix" and the like should be broadly understood. For example, it may be fixed connection, detachable connection or integration into one; it may be mechanical connection, electrical connection or communication with each other; it may be direct connection or indirect connection through an intermediary, and it may be internal connection of two elements or interaction between two elements, unless otherwise specifically defined. For those skilled in the art, the specific meanings of the above terms in the present application can be understood according to the specific circumstances.

In the present application, unless otherwise specifically stated and defined, a first feature being "above" or "below" a second feature may be that, the first and second features are in direct contact, or the first and second features are in indirect contact through an intermediary. Moreover, the first feature being "above", "over" and "on" the second feature may be that, the first feature is right above or diagonally above the second feature, or may only mean that the horizontal height of the first feature is higher than that of the second feature. The first feature being "under", "below" and "beneath" the second feature may be that, the first feature is right below or diagonally below the second feature, or may only mean that the horizontal height of the first feature is smaller than the second feature.

In the above description, the description referring to the term "an/one embodiment", "some embodiments", "an example", "a specific example" or "some examples" or the like means that specific features, structures, materials or characteristics described in connection with the embodiment(s) or example(s) are included in at least one embodiment or example of the present application. In this specification, the schematic expressions of the above terms are not necessarily aimed at the same embodiment or example. Moreover, the specific features, structures, materials or characteristics described may be combined in any one or more embodiments or examples in a suitable manner. In addition, those skilled in the art can combine and integrate different embodiments or examples described in this specification and features of different embodiments or examples without contradicting each other.

In the related art, in order to enable a submarine cable to have better water-blocking performance in complex submarine environment, an aluminum-plastic composite tape and a sheath are selected as a comprehensive water-blocking layer for an electric unit. However, in the production process of the submarine cable with a long length, due to the length limitation of the aluminum-plastic composite tape, it is necessary to perform tape changing and tape connection for the aluminum-plastic composite tape, which will lead to the problem that the comprehensive water-blocking layer cannot be produced continuously.

In order to solve the above problem, the present application provides a submarine cable manufacturing device and a submarine cable manufacturing method. The continuous production of aluminum-plastic composite tapes and sheaths can be realized through a machine set for continuous production of aluminum-plastic composite tapes and sheaths, thus avoiding the problem of tape breakage of an aluminum-plastic composite tape layer in the production process. In addition, the machine set for continuous production of aluminum-plastic composite tapes and sheaths performs continuous production of the aluminum-plastic composite tape layer and a sheath layer, which can improve the consistency of the aluminum-plastic composite tape layer and the sheath layer, so that the water-blocking performance of a comprehensive water-blocking layer formed by the aluminum-plastic composite tape layer and the sheath layer is consistent at different positions.

The submarine cable manufacturing device and method provided by the embodiments of the present application will be described in detail with specific embodiments.

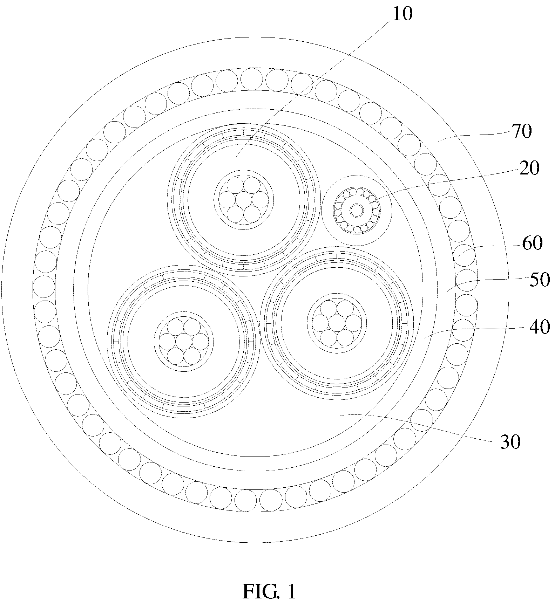

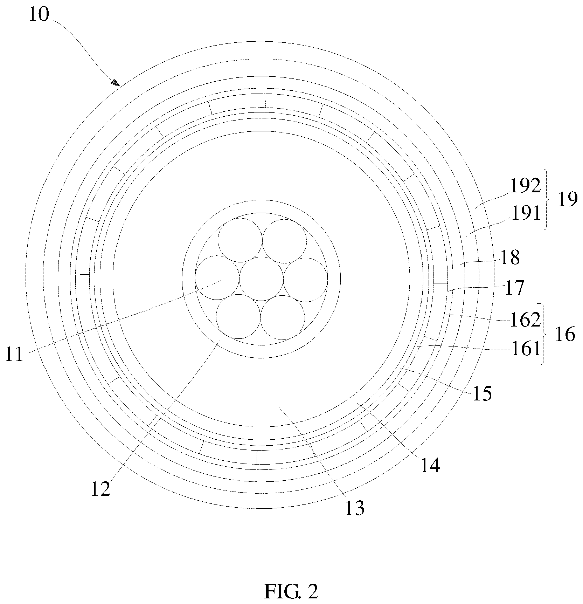

FIG. 1 is a schematic structural diagram of a submarine cable provided by an embodiment of the present application; FIG. 2 is a schematic structural diagram of an electric unit in the submarine cable provided in FIG. 1.

As shown in FIG. 1 and FIG. 2, an embodiment of the present application provides a submarine cable, which includes electric units 10, an optical unit 20, fillers 30, a tape wrapping layer 40, an inner protective layer 50, an armor layer 60 and an outer coating layer 70.

The number of electric units 10 is three. The electric unit 10 includes a water-blocking conductor 11, a conductor shielding layer 12, an insulating layer 13, an insulation shielding layer 14, a first semi-conductive water-blocking tape wrapping layer 15, a metal shielding layer 16, a second semi-conductive water-blocking tape wrapping layer 17, an aluminum-plastic composite tape layer 18 and a sheath layer 19. The conductor shielding layer 12, the insulating layer 13, the insulation shielding layer 14, the first semi-conductive water-blocking tape wrapping layer 15, the metal shielding layer 16, the second semi-conductive water-blocking tape wrapping layer 17, the aluminum-plastic composite tape layer 18 and the sheath layer 19 are sequentially disposed outside the water-blocking conductor 11.

The water-blocking conductor 11 is formed by twisting a semi-conductive water-blocking tape and a plurality of soft copper wires. The embodiments of the present application do not particularly limit the water-blocking conductor 11, and the cross-sectional area of the water-blocking conductor 11 can be determined according to actual needs. In an optional implementation, the cross-sectional area of the water-blocking conductor 11 is 50~500mm².

The conductor shielding layer 12 is wrapped outside the water-blocking conductor 11, and the conductor shielding layer 12 can uniformly shield the electric field of the water-blocking conductor 11, prevent electromagnetic waves from interfering with transmission signals of the submarine cable, and improve the transmission performance of the submarine cable. The embodiments of the present application do not particularly limit the conductor shielding layer 12, and the thickness of the conductor shielding layer 12 can be determined according to the voltage level of the submarine cable. A range of the thickness of the conductor shielding layer 12 is 0.7~1.3mm.

A material of the conductor shielding layer 12 may be polyethylene. In other implementations, other materials may be selected for the shielding layer 12, which is not specifically set here.

The insulating layer 13 is wrapped outside the conductor shielding layer 12, and the insulating layer 13 can ensure the insulation of the electric units 10 and prevent the breakdown of two adjacent electric units 10. The embodiments of the present application do not particularly limit the insulating layer 13, and the thickness of the insulating layer 13 can be determined according to actual needs. In an optional implementation, the thickness of the insulating layer 13 is 3.4~16mm.

A material of the insulating layer 13 may be crosslinked polyethylene. In other implementations, other materials may be selected for the insulating layer 13, which is not specifically set here.

The insulation shielding layer 14 is wrapped outside the insulating layer 13, and the insulation shielding layer 14 can even the electric field of the insulating layer 13, prevent electromagnetic waves from interfering with the transmission signals of the submarine cable, and improve the transmission performance of the submarine cable. The embodiments of the present application do not particularly limit the insulation shielding layer 14, and the thickness of the insulation shielding layer 14 can be determined according to the voltage level of the submarine cable. A range of the thickness of the insulation shielding layer 14 is from 0.7~1.3mm.

A material of the insulation shielding layer 14 may be polyethylene. In other implementations, other materials may be selected for the insulation shielding layer 14, which is not specifically set here.

The first semi-conductive water-blocking tape wrapping layer 15 is wrapped around the outer side of the insulation shielding layer 14 by adopting a single-layer overlapping wrapping semi-conductive water-blocking tape, and the first semi-conductive water-blocking tape wrapping layer 15 is configured to block water. The thickness of the semi-conductive water-blocking tape adopted by the first semi-conductive water-blocking tape wrapping layer 15 can be determined according to actual needs. In an optional implementation, the thickness of the first semi-conductive water-blocking tape wrapping layer 15 is 0.5~1mm, and the covering rate of the first semi-conductive water-blocking tape wrapping layer 15 is not less than 20%.

The metal shielding layer 16 includes a metal wire shielding layer 161 and a metal tape shielding layer 162, and the metal shielding layer 16 is configured for electromagnetic shielding. The metal wire shielding layer 161 is wrapped around the outer side of the first semi-conductive water-blocking tape wrapping layer 15 with a metal wire. The metal tape shielding layer 162 is wrapped around the outer side of the metal wire shielding layer 161 with a metal tape. The diameter of the metal wire used for the metal wire shielding layer 161 may be 1mm; the thickness of the metal tape used for the metal tape shielding layer 162 is 1mm, and the width of the metal tape used for the metal tape shielding layer 162 can be determined according to actual needs. In an optional implementation, the wrapping direction of the metal wire shielding layer 161 is the same as the wrapping direction of the metal tape shielding layer 162, and the wrapping direction of the metal wire shielding layer 161 is opposite to the wrapping direction of the first semi-conductive water-blocking tape wrapping layer 15. A wrapping pitch of the metal wire shielding layer 161 is 10~12 times of an outer diameter of a cable core of the submarine cable, and a gap width of the metal tape shielding layer 162 is 2~5 times of the width of the metal tape.

The second semi-conductive water-blocking tape wrapping layer 17 is wrapped around the outer side of the metal tape shielding layer 162 by adopting a single-layer overlapping wrapping semi-conductive water-blocking tape, and the second semi-conductive water-blocking tape wrapping layer 17 is configured to block water. The thickness of the semi-conductive water-blocking tape adopted by the second semi-conductive water-blocking tape wrapping layer 17 can be determined according to actual needs. In an optional implementation, the thickness of the second semi-conductive water-blocking tape wrapping layer 17 is 0.5~1mm, and the covering rate of the second semi-conductive water-blocking tape wrapping layer 17 is not less than 20%.

It should be noted that the wrapping direction of the first semi-conductive water-blocking tape wrapping layer 15 and the wrapping direction of the second semi-conductive water-blocking tape wrapping layer 17 is the same.

The aluminum-plastic composite tape layer 18 is longitudinally wrapped around the outer side of the second semi-conductive water-blocking tape wrapping layer 17 by adopting an aluminum-plastic composite tape, and the aluminum-plastic composite tape layer 18 is configured to block water. The overlapping width of the aluminum-plastic composite tape adopted by the aluminum-plastic composite tape layer 18 can be determined according to actual needs. In an optional implementation, the overlapping width of the aluminum-plastic composite tape layer 18 may be 10% of the width of the selected aluminum-plastic composite tape.

The sheath layer 19 is extruded and wrapped around the outer side of the aluminum-plastic composite tape layer 18, and the sheath layer 19 is configured to block water. The thickness of the sheath layer 19 can be determined according to actual needs. In an optional implementation, the sheath layer 19 includes an insulating polyethylene sheath layer 191 and a semi-conductive polyethylene sheath layer 192, where the insulating polyethylene sheath layer 191 is extruded and wrapped around the outer side of the aluminum-plastic composite tape layer 18, and the semi-conductive polyethylene sheath layer 192 is extruded and wrapped on the insulating polyethylene sheath layer 191. The thickness of the semi-conductive polyethylene sheath layer 192 is 0.5~1mm, so that the stability of the electric field of the submarine cable can be ensured.

The aluminum-plastic composite tape layer 18 and the sheath layer 19 form a comprehensive water-blocking layer.

The optical unit 20 includes an optical fiber, a stainless steel tube, a polyethylene inner protective layer, a steel wire armor layer and a polyethylene outer protective layer in order from inside to outside. The optical unit 20 is twisted with the electric units 10. The number of optical units 20 is 1~3.

The fillers 30 are filled in the gap between the electric units 10, the optical unit 20 and the tape wrapping layer 40. The fillers 30 are configured to increase the cable weight and improve the mechanical strength of the cable while ensuring the roundness of the cable core. The number of the fillers 30 is plural. The filler 30 may be a polyethylene filler strip or a polypropylene filler rope.

The tape wrapping layer 40 is wrapped around the outer sides of the electric units 10, the optical unit 20 and the fillers 30. The tape wrapping layer 40 is configured to protect the electric units 10, the optical unit 20 and the fillers 30, which can prolong the service life of the submarine cable. The embodiments of the present application do not particularly limit the tape layer wrapping 40, and any tape wrapping layer that can protect the electric units 10, the optical unit 20 and the fillers 30 is within the protection scope of the embodiments of the present application.

A material of the tape wrapping layer 40 may be polyethylene or polyurethane. The embodiments of the present application do not particularly limit the tape wrapping layer 40, and the thickness of the tape wrapping layer 40 can be determined according to actual needs. In an optional implementation, the thickness of the tape wrapping layer 40 is 0.3mm.

The inner protective layer 50 is wrapped around the outer side of the tape wrapping layer 40. The inner protective layer 50 is configured to protect the electric units 10, the optical unit 20 and the fillers 30, which can prolong the service life of the submarine cable. The embodiments of the present application do not particularly limit the inner protective layer 50, and any inner protective layer 50 that can protect the electric units 10, the optical unit 20 and the fillers 30 is within the protection scope of the embodiments of the present application. The embodiments of the present application do not particularly limit the inner protective layer 50, and the thickness of the inner protective layer 50 can be determined according to actual needs. In an optional implementation, the thickness of the inner protective layer 50 is 2~3mm.

The armor layer 60 is formed by wrapping a plurality of armor steel wires in different directions. The armor steel wire may adopt a galvanized steel wire. The number of armor layers 60 are even and at least two, which can improve the abrasion resistance of the submarine cable. The embodiments of the present application do not particularly limit the armor layer 60, and the thickness of the armor layer 60 can be determined according to actual needs. In an optional implementation, the thickness of the armor layer 60 is 3~6mm.

The outer coating layer 70 is wrapped around the outer side of the armor layer 60, and the outer coating layer 70 is configured to protect the armor layer 60, which can prolong the service life of the submarine cable. The embodiments of the present application do not particularly limit the outer coating layer 70, and any outer coating layer 70 that can protect the armor layer 60 is within the protection scope of the embodiments of the present application. The embodiments of the present application do not particularly limit the outer coating layer 70, and the thickness of the outer coating layer 70 can be determined according to actual needs. In an optional implementation, the thickness of the outer coating layer 70 is 2~3mm.

Specifically, a material of the outer coating layer 70 may be one of high-density polyethylene, medium-density polyethylene, linear low-density polyethylene, polyurethane, etc.

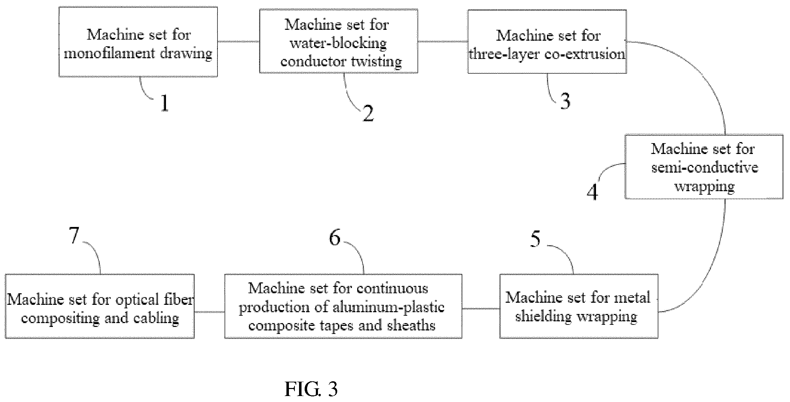

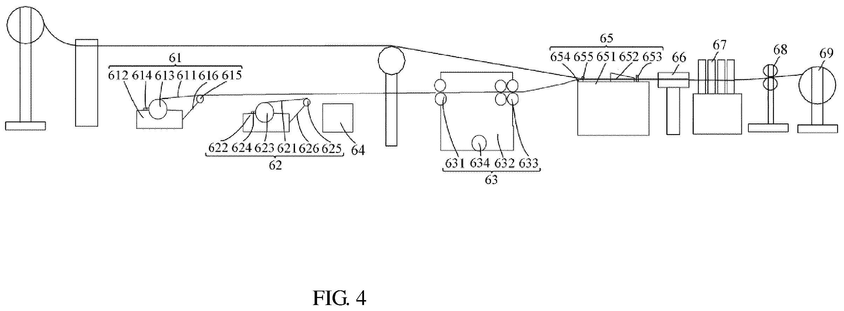

FIG. 3 is a structural block diagram of a submarine cable manufacturing device provided by an embodiment of the present application; FIG. 4 is a schematic structural diagram of an application of a machine set for continuous production of aluminum-plastic composite tapes and sheaths in the submarine cable manufacturing device provided in FIG. 3.

As shown in FIG. 3 and FIG. 4, the embodiments of the present application also provide a submarine cable manufacturing device, which includes a machine set for continuous production of aluminum-plastic composite tapes and sheaths 6. The machine set for continuous production of aluminum-plastic composite tapes and sheaths 6 is configured to longitudinally wrap an aluminum-plastic composite tape around the outer side of a second semi-conductive water-blocking tape wrapping layer 17 to form an aluminum-plastic composite tape layer 18, and extrude an extruded material outside the aluminum-plastic composite tape layer 18 to form a sheath layer 19. The machine set for continuous production of aluminum-plastic composite tapes and sheaths 6 can achieve synchronous and continuous production of the aluminum-plastic composite strip layer 18 and the sheath layer 19.

The machine set for continuous production of aluminum-plastic composite tapes and sheaths 6 includes a first tape dispenser 61, a second tape dispenser 62, a welding machine 64 and a tape storage machine 63. The first tape dispenser 61 is provided with a first aluminum-plastic composite tape 611, and the second tape dispenser 62 is provided with a second aluminum-plastic composite tape 621. The tape storage machine 63 is configured to store the first aluminum-plastic composite tape 611 with a predetermined length in a tape changing process of the first tape dispenser 61. The welding machine 64 is configured to weld and connect the first aluminum-plastic composite tape 611 with the predetermined length with the second aluminum-plastic composite tape 621 in a tape connection process of the second tape dispenser 62. The continuous production of aluminum-plastic composite tapes and sheaths can be realized through the machine set for continuous production of aluminum-plastic composite tapes and sheaths 6, which avoids the problem of tape breakage of the aluminum-plastic composite tape layer 18 in the production process, and further improves the production efficiency of the submarine cable. In addition, the machine set for continuous production of aluminum-plastic composite tapes and sheaths 6 continuously produces the aluminum-plastic composite tape layer 18 and the sheath layer 19, which can improve the consistency of the aluminum-plastic composite tape layer 18 and the sheath layer 19, so that the water-blocking performance of a comprehensive water-blocking layer formed by the aluminum-plastic composite tape layer 18 and the sheath layer 19 is consistent at different positions.

The first aluminum-plastic composite tape 611 and the second aluminum-plastic composite tape 621 are made of the same material, and are both aluminum-plastic composite tapes.

The welding machine 64 may be a welding machine commonly used in the field, and no specific setting is made here. When the welding machine 64 welds the first aluminum-plastic composite tape 611 and the second aluminum-plastic composite tape 621, the welding strength of a welding seam needs to reach more than 90% of the body strength of the aluminum-plastic composite tape, and it is necessary to ensure that the welding seam is free from abnormalities such as welding missing and welding penetration.

It should be noted that when the remaining length of the first aluminum-plastic composite tape 611 on the first tape dispenser 61 is a predetermined length, it is necessary to store the first aluminum-plastic composite tape 611 with the predetermined length in the tape storage machine 63, and prepare to connect the second aluminum-plastic composite tape 621 on the second tape dispenser 62 with the first aluminum-plastic composite tape 611 on the first tape dispenser 61, so as to avoid the problem of tape breakage of the aluminum-plastic composite tape layer 18 in the production process.

Optionally, the submarine cable manufacturing device further includes a machine set for monofilament drawing 1, a machine set for water-blocking conductor twisting 2, a machine set for three-layer co-extrusion 3, a machine set for semi-conductive wrapping 4, a machine set for metal shielding wrapping 5 and a machine set for optical fiber compositing and cabling 7.

The machine set for monofilament drawing 1 is configured to draw metallic copper into soft copper wires. The machine set for monofilament drawing 1 may be a copper heavy drawing machine.

The machine set for water-blocking conductor twisting 2 is configured to twist a semi-conductive water-blocking tape and a plurality of soft copper wires to form a water-blocking conductor 11. The machine set for water-blocking conductor twisting 2 may be a frame twisting machine.

The machine set for three-layer co-extrusion 3 is configured to extrude a conductor shielding material, an insulating material and an insulation shielding material outside the water-blocking conductor 11 to form a conductor shielding layer 12, an insulating layer 13 and an insulation shielding layer 14. The machine set for three-layer co-extrusion 3 may include a conductor shielding extruder, an insulation shielding extruder and an insulation shielding extruder.

A material of the conductor shielding layer 12 may be polyethylene. A material of the insulating layer 13 may be crosslinked polyethylene. A material of the insulation shielding layer 14 may be polyethylene.

The machine set for semi-conductive wrapping 4 is configured to wrap a semi-conductive water-blocking tape around the outer side of the insulation shielding layer 14 to form a first semi-conductive water-blocking tape wrapping layer 15 and a second semi-conductive water-blocking tape wrapping layer 17. The machine set for semi-conductive wrapping 4 may include two wrapping machines.

The machine set for metal shielding wrapping 5 is configured to wrap a metal wire and a metal tape around the outer side of the first semi-conductive water-blocking tape wrapping layer 15 to form a metal wire shielding layer 161 and a metal tape shielding layer 162. The machine set for metal shielding wrapping 5 may include a metal wire frame twisting machine 51 and a metal tape frame twisting machine.

The machine set for optical fiber compositing and cabling 7 is configured to twist the electric units 10 and the optical unit 20, and the fillers 30 fill gaps between the electric units 10 and the optical unit 20 and the outer side. The tape, inner protective material, armor steel wire and outer coating material are wrapped on the outer side of the combined entirety of the electric units 10, the optical unit 20 and the fillers 30 to form a submarine cable. The machine set for optical fiber compositing and cabling 7 may be formed by a vertical cable forming machine, a wrapping machine, an armor machine and an extruder commonly used in the field.

It should also be pointed out that in FIG. 4, in addition to the machine set for continuous production of aluminum-plastic composite tapes and sheaths 6, there is also an accessory for providing the water-blocking conductor 11 with the second semi-conductive water-blocking tape wrapping layer 17 to a longitudinal wrapping machine 65.

Optionally, the first tape dispenser 61 includes a first fixing table 612, a first tape reel 613, a first magnetic powder brake 614, a first guide wheel 615 and a first guide wheel holder 616. The first tape reel 613 is rotatably installed on the first fixing table 612, and the first magnetic powder brake 614 is disposed on the first fixing table 612. The first magnetic powder brake 614 is connected with the first tape reel 613, and the first aluminum-plastic composite tape 611 is wrapped around the first tape reel 613. The first magnetic powder brake 614 is configured to make the first aluminum-plastic composite tape 611 maintain a predetermined tension after being released. The first guide wheel holder 616 is fixed on the first fixing table 612, and the first guide wheel 615 is installed on the first guide wheel holder 616. The first guide wheel 615 is located in the releasing direction of the first aluminum-plastic composite tape 611, and the first guide wheel 615 is configured to make the first aluminum-plastic composite tape 611 be positioned below the water-blocking conductor 11 with the second semi-conductive water-blocking tape wrapping 17 after being released.

The first fixing table 612 is fixed on the ground by welding or bolts or other means.

The first tape reel 613 is rotatably driven by a motor on the first fixing table 612, and the first aluminum-plastic composite tape 611 is wrapped on the first tape reel 613.

The first magnetic powder brake 614 is a magnetic powder brake commonly used in the field. For example, a magnetic powder brake with rated torque of 8 N·m and slip power of 1200W may be selected.

The first guide wheel 615 plays a guiding role, so that the first aluminum-plastic composite tape 611 is positioned below the water-blocking conductor 11 with the second semi-conductive water-blocking tape wrapping 17 after being released.

Optionally, the second tape dispenser 62 includes a second fixing table 622, a second tape reel 623, a second magnetic powder brake 624, a second guide wheel 625 and a second guide wheel holder 626. The second tape reel 623 is rotatably disposed on the second fixing table 622, and the second magnetic powder brake 624 is disposed on the second fixing table 622. The second magnetic powder brake 624 is connected with the second tape reel 623, and the second aluminum-plastic composite tape 621 is wrapped around the second tape reel 623. The second magnetic powder brake 624 is configured to make the second aluminum-plastic composite tape 621 maintain a predetermined tension after being released. The second guide wheel holder 626 is fixed on the second fixing table 622, and the second guide wheel 625 is installed on the second guide wheel holder 626. The second guide wheel 625 is located in the releasing direction of the second aluminum-plastic composite tape 621, and the second guide wheel 625 is configured to make the second aluminum-plastic composite tape 621 be positioned below the water-blocking conductor 11 with the second semi-conductive water-blocking tape wrapping 17 after being released.

The second fixing table 622 is fixed on the ground by welding or bolts or other means.

The second tape reel 623 is rotatably driven by a motor on the second fixing table 622, and the second aluminum-plastic composite tape 621 is wrapped on the second tape reel 623.

The second magnetic powder brake 624 is a magnetic powder brake commonly used in the field. For example, a magnetic powder brake with rated torque of 8 N·m and slip power of 1200W may be selected.

The second guide wheel 625 plays a guiding role, so that the second aluminum-plastic composite tape 621 is positioned below the water-blocking conductor 11 with the second semi-conductive water-blocking tape wrapping layer 17 after being released.

It should be noted that in a tape changing process of the first tape dispenser 61, when the remaining length of the first aluminum-plastic composite tape 611 on the first tape dispenser 61 is a predetermined length, it is necessary to store the first aluminum-plastic composite tape 611 with the predetermined length in the tape storage machine 63, and prepare to connect the second aluminum-plastic composite tape 621 on the second tape dispenser 62 with the first aluminum-plastic composite tape 611 on the first tape dispenser 61, so as to avoid the problem of tape breakage of the aluminum-plastic composite tape in the production process. When the first aluminum-plastic composite tape 611 and the second aluminum-plastic composite tape 621 cannot meet the submarine cable even they are added, it is necessary to re-prepare the first aluminum-plastic composite tape 611 on the first tape dispenser 61 during the use of the second tape dispenser 62 to ensure the continuous production of the aluminum-plastic composite tape layer 18 and the sheath layer 19. At this time, a tape changing process of the second tape dispenser 62 is the same as that of the first tape dispenser 61, and will not be described in detail here.

Optionally, the machine set for continuous production of aluminum-plastic composite tapes and sheaths 6 further includes the longitudinal wrapping machine 65, an extruder 66, a cooling water tank 67, a tractor 68 and a take-up frame 69. The longitudinal wrapping machine 65 is configured to synchronously form the aluminum-plastic composite tape layer 18 outside the second semi-conductive water-blocking tape wrapping layer 17. The extruder 66 is configured to synchronously extrude the sheath layer 19 after the longitudinal wrapping machine 65. The cooling water tank 67 is configured to cool the sheath layer 19. The tractor 68 is configured to tow the water-blocking conductor 11 with the aluminum-plastic composite tape layer 18 and the sheath layer 19 to the take-up frame 69.

The extruder 66 may be an extruder commonly used in the field, and no specific setting is made here.

The cooling water tank 67 includes four water tanks. The four water tanks sequentially cool the sheath layer 19. Temperatures of the four water tanks are 50~60°C, 35~45°C, 20~30°C and 5~15°C, respectively, so that the uniform cooling of the sheath layer 19 can be ensured, and the internal stress of the sheath layer 19 can be reduced, thereby ensuring the surface quality of the sheath layer 19.

The tractor 68 may be a tractor commonly used in the field, and no specific setting is made here. The traction speed of the tractor 68 depends on the specific curing conditions. In some implementations, the traction speed of the tractor 68 is 2~10m/min, which can enhance the cooling effect.

The take-up frame 69 may be a take-up frame commonly used in the field, and no specific setting is made here.

Optionally, the tape storage machine 63 includes tape storage wheels 631, a tape storage box 632, and tension wheels 633. The tape storage box 632 is provided with an accommodating cavity. The tape storage wheels 631 are installed close to an end of the tape storage box 632 at which the first aluminum-plastic composite tape 611 enters the tape storage box 632, and the tension wheels 633 are installed close to an end of the tape storage box 632 at which the first aluminum-plastic composite tape 611 leaves the tape storage box 632. The tape storage wheels 631 are configured to store the first aluminum-plastic composite tape 611 with a predetermined length in the accommodating cavity during the tape changing process of the first tape dispenser 61, and the tension wheels 633 are configured to provide the first aluminum-plastic composite tape 611 to the longitudinal wrapping machine 65 during the tape changing process of the first tape dispenser 61.

The number of the tape storage wheels 631 is two, and the tape storage wheels 631 are configured with a motor. The number of the tension wheels 633 is four. Every two tension wheels 633 form a group, and two groups of tension wheels 633 are both configured with motors.

When the tape storage machine 63 needs to store the first aluminum-plastic composite tape 611, a motor on the first tape dispenser 61 and the first magnetic powder brake 614 are stopped from working, and the motors configured for the tape storage wheels 631 and the tension wheels 633 are started to work. The first aluminum-plastic composite tape 611 with the predetermined length is stored in the accommodating cavity of the tape storage box 632 through two storage wheels 631, and the two groups of tension wheels 633 provide the first aluminum-plastic composite tape 611 in the accommodating cavity to the longitudinal wrapping machine 65.

Optionally, the tape storage machine 63 further includes an adjusting rod 634. The adjusting rod 634 is disposed in the accommodating cavity, and the adjusting rod 634 is configured to adjust a distance of the tape storage box 632 in the width direction of the first aluminum-plastic composite tape 611, so as to prevent situations of aluminum-plastic composite tapes with different specifications being stuck and broken because of the tapes turning over during tape storage and dispensation.

The tape storage box 632 is provided with an opening on the top, and the tape storage box 632 includes two side plates along the width direction of the first aluminum-plastic composite tape 611, two fixing plates along the length direction of the first aluminum-plastic composite tape 611, and a bottom plate located in the vertical direction. The two fixing plates are fixed on the bottom plate, and the two side plates are slidably disposed between the two fixing plates.

The adjusting rod 634 is disposed between the two side plates, and the adjusting rod 634 can adjust the distance between the two side plates, thus preventing the situations of the aluminum-plastic composite tapes with different specifications being stuck and broken because of the tapes turning over during the tape storage and dispensation. The adjusting rod 634 may be a threaded rod.

Optionally, the longitudinal wrapping machine 65 includes a longitudinal wrapping platform 651, a longitudinal wrapping mold 652 and a hot melt adhesive machine 653. The longitudinal wrapping mold 652 is fixed on the longitudinal wrapping platform 651. The first aluminum-plastic composite tape 611 or the second aluminum-plastic composite tape 621 is threaded into the longitudinal wrapping mold 652, and the hot melt adhesive machine 653 is disposed at an exit of the longitudinal wrapping mold 652.

The longitudinal wrapping machine 65 is located at a downstream position of the tape storage machine 63. The longitudinal wrapping platform 651 is a square platform, and the longitudinal wrapping platform 651 is fixed on the ground.

The longitudinal wrapping mold 652 is a longitudinal wrapping mold commonly used in the field, and the longitudinal wrapping mold 652 may be made into a trumpet shape by rolling a metal plate. The longitudinal wrapping mold 652 is fixed on the longitudinal wrapping platform 651 by two bolts.

The hot melt adhesive machine 653 is a hot melt adhesive machine commonly used in the field. The hot melt adhesive machine 653 is configured to apply hot melt adhesive to overlapping parts of aluminum-plastic composite tapes passing through the longitudinal wrapping mold 652. In order to avoid the adhesive mouth blockage in an adhesive applying process of the hot melt adhesive machines 653, the number of hot melt adhesive machines 653 is two, and one of the hot melt adhesive machines 653 is a standby hot melt adhesive machine.

Optionally, the longitudinal wrapping machine 65 further includes a tape-guiding wheel 654 and a cable-guiding wheel 655, which are fixed on the longitudinal wrapping platform 651 and located at an entrance of the longitudinal wrapping mold 652. The tape-guiding wheel 654 is configured to make the first aluminum-plastic composite tape 611 or the second aluminum-plastic composite tape 621 extend in the extension direction of the longitudinal wrapping mold 652, and the cable-guiding wheel 655 is configured to make the water-blocking conductor 11 with the second semi-conductive water-blocking tape wrapping layer 17 extend in the extension direction of the longitudinal wrapping mold 652.

The first aluminum-plastic composite tape 611 or the second aluminum-plastic composite tape 621 entering the longitudinal wrapping mold 652 is located below the water-blocking conductor 11 with the second semi-conductive water-blocking tape wrapping layer 17 entering the longitudinal wrapping mold 652.

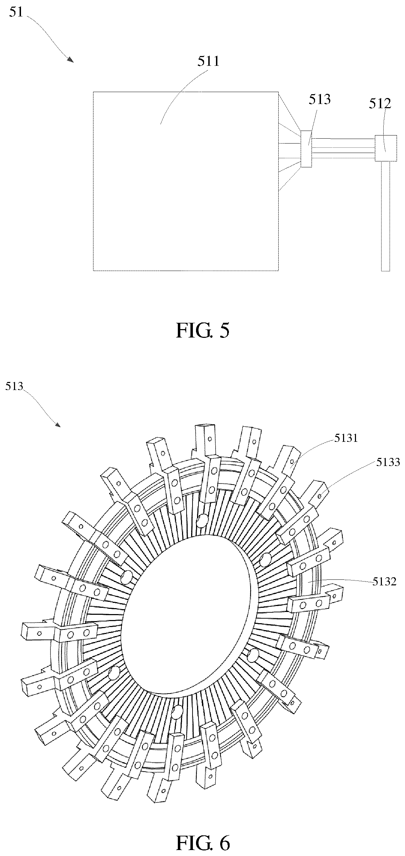

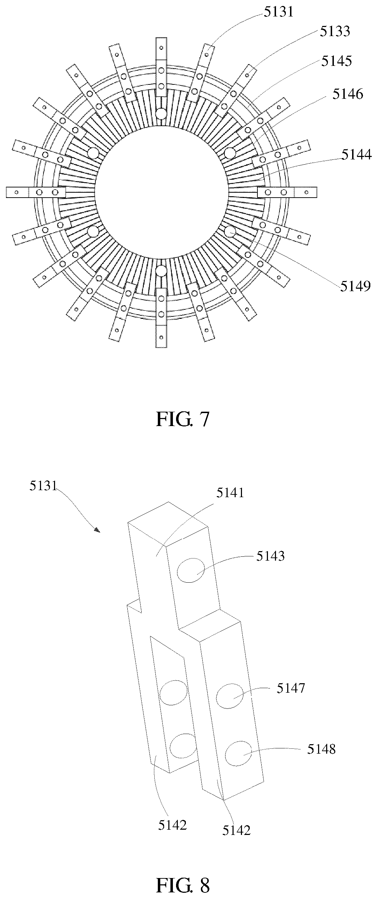

FIG. 5 is a schematic structural diagram of a metal wire frame twisting machine of a machine set for metal shielding wrapping in FIG. 3; FIG. 6 is a schematic structural diagram of a metal wire uniform distribution assembly of the metal wire frame twisting machine in FIG. 5; FIG. 7 is a schematic structural diagram of another state of the metal wire uniform distribution assembly in FIG. 6; FIG. 8 is a schematic structural diagram of a threading module of the metal wire uniform distribution assembly in FIG. 6.

Optionally, as shown in FIG. 5 to FIG. 8, the machine set for metal shielding wrapping 5 includes the metal wire frame twisting machine 51. The metal wire frame twisting machine 51 includes a metal wire frame twisting machine body 511, a metal wire forming mold 512 and a metal wire uniform distribution assembly 513. The metal wire uniform distribution assembly 513 is located between the metal wire frame twisting machine body 511 and the metal wire forming mold 512, and is fixed on the metal wire frame twisting machine body 511. The metal wire uniform distribution assembly 513 is configured to uniformly distribute a plurality of metal wires in a circumferential direction.

The metal wire frame twisting machine body 511 is configured to provide a plurality of wires. The metal wire forming mold 512 is configured to twist a plurality of metal wires around the outer side of the first semi-conductive water-blocking tape wrapping layer 15.

The metal wire uniform distribution assembly 513 evenly distributes a plurality of metal wires in the circumferential direction, so that problems of uneven distribution and easy accumulation of metal wires during a twisting process of the plurality of metal wires can be avoided, which further avoids problems of uneven axial-potential distribution of the submarine cable and local flashover caused by the increase of a longitudinal voltage component. The metal wire uniform distribution assembly 513 includes threading modules 5131, a circular wire distribution disc 5132 and oil-free bushings 5133. The number of the threading modules 5131 is set corresponding to the number of metal wires. Each threading module 5131 is provided with a threading hole 5143 for a metal wire to pass through, and each threading hole is provided with an embedded oil-free bushing 5133. The threading modules 5131 are uniformly fixed on the circular wire distribution discs 5132 along a circular direction of the circular wire distribution disc 5132.

Specifically, the threading modules 5131 are made of 45-steel. Each threading module 5131 includes a threading block 5141 and two clamping blocks 5142, and the shapes of the threading block 5141 and the clamping blocks 5142 are all rectangular. The two clamping blocks 5142 fix one end of the threading block 5141, and the two clamping blocks 5142 enclose a clamping space. The other end of the threading block 5141 is provided with the threading hole 5143.

The circular wire distribution disc 5132 is annular in shape. The circular wire distribution disc 5132 is provided with scale lines 5144, which evenly distribute the circular wire distribution disc 5132 in the circumferential direction, so that the threading modules 5131 can be evenly distributed through the scale lines. The circular wire distribution disc 5132 is made of 45-steel.

The circular wire distribution disc 5132 is provided with an outer slide rail 5145 and an inner slide rail 5146 on both axial sides. The outer slide rails 5145 and the inner slide rails 5146 are all circular slide rails. The inner slide rail 5146 is located on the inner side of the outer slide rail 5145. Two clamping blocks 5142 of the threading module 5131 are slidably disposed on the outer slide rails 5145 and the inner slide rails 5146.

The circular wire distribution disc 5132 is provided with wire distribution disc fixing threaded holes 5149, and the number of the wire distribution disc fixing threaded holes 5149 is plural. The plurality of wire distribution disc fixing threaded holes 5149 are arranged along the circumferential direction. After being assembled, the metal wire uniform distribution assembly 513 is then fixed on the metal wire frame twisting machine body 511 by wire distribution disc fixing bolts passing through the wire distribution disc fixing threaded holes 5149.

It should be noted that the threading module 5131 is provided with an outer fixing threaded hole 5147 and an inner fixing threaded hole 5148. When the position of the threading module 5131 on the circular wire distribution disc 5132 is determined, the threading module 5131 can be fixed on the outer slide rail 5145 and the inner slide rail 5146 through an inner fixing bolt and an outer fixing bolt. The outer slide rail 5145 and the inner slide rail 5146 need to be coated with a thin layer of lubricating oil regularly, which is convenient for the threading modules 5131 to adjust their positions and not easy to get stuck.

The oil-free bushing 5133 is made of a nano-material. The oil-free bushing 5133 is embedded in the threading hole 5143, and a metal wire can be threaded through the oil-free bushing 5133. The surface of the oil-free bushing 5133 is smooth and has good wear resistance, which can prevent the metal wire from being scratched.

In an optional implementation, the wire uniform distribution assembly 513 includes 20 threading modules 5131, a circular wire distribution disc 5132, 20 oil-free bushings 5133, 20 outer fixing bolts, 20 inner fixing bolts, outer slide rails 5145, inner slide rails 5146, scale lines 5144 and 6 wire distribution disc fixing bolts. The scale lines 5144 divide the circular wire distribution disc 5132 into 100 grids, and the width of every two grids is the same as that of the threading module 5131. The threading modules 5131 can move freely on the outer slide rails 5145 and the inner slide rails 5146. When the wire uniform distribution assembly 513 is used, firstly, the threading modules 5131 of the number corresponding to the number of metal wires are selected, and then the threading modules 5131 are uniformly distributed on the circular wire distribution disc 5132 through the scale lines 5144. After the positions of the threading modules 5131 are determined, the threading modules 5131 are fixed on the outer slide rails 5145 and the inner slide rails 5146 respectively through the outer fixing bolts and the inner fixing bolts.

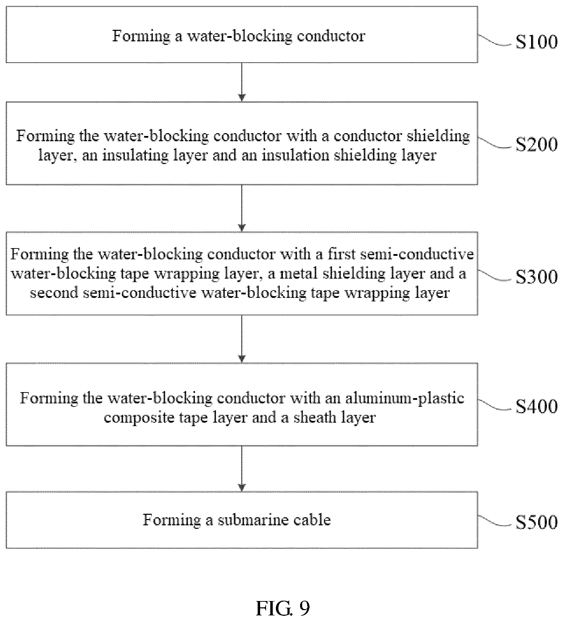

FIG. 9 is a structural block diagram of a submarine cable manufacturing method provided by an embodiment of the present application.

As shown in FIG. 9, the embodiments of the present application also provide a submarine cable manufacturing method, including the following steps.

S100: forming a water-blocking conductor 11.

Metallic copper is drawn into soft copper wires by a machine set for monofilament drawing 1. A machine set for water-blocking conductor twisting 2 twists a semi-conductive water-blocking tape and a plurality of soft copper wires to form the water-blocking conductor 11.

S200: forming the water-blocking conductor 11 with a conductor shielding layer 12, an insulating layer 13 and an insulation shielding layer 14.

A conductor shielding material, an insulating material and an insulation shielding material are extruded outside the water-blocking conductor 11 by a machine set for three-layer co-extrusion 3 to form the conductor shielding layer 12, the insulating layer 13 and the insulation shielding layer 14.

A material of the conductor shielding layer 12 may be polyethylene. A material of the insulating layer 13 may be crosslinked polyethylene. A material of the insulation shielding layer 14 may be polyethylene.

S300: forming the water-blocking conductor 11 with a first semi-conductive water-blocking tape wrapping layer 15, a metal shielding layer 16 and a second semi-conductive water-blocking tape wrapping layer 17.

A machine set for semi-conductive wrapping 4 and a machine set for metal shielding wrapping 5 sequentially generate the first semi-conductive water-blocking tape wrapping layer 15, the metal shielding layer 16 and the second semi-conductive water-blocking tape wrapping layer 17 outside the insulation shielding layer 14.

S400: forming the water-blocking conductor 11 with an aluminum-plastic composite tape layer 18 and a sheath layer 19.

An aluminum-plastic composite tape is longitudinally wrapped around the outer side of the second semi-conductive water-blocking tape wrapping layer 17 by a machine set for continuous production of aluminum-plastic composite tapes and sheaths 6 to form the aluminum-plastic composite tape layer 18, and an extruded material is extruded outside the aluminum-plastic composite tape layer 18 to form the sheath layer 19.

S500: forming a submarine cable.

Electric units 10 and an optical unit 20 are twisted by a machine set for optical fiber compositing and cabling 7, and fillers 30 fill gaps between the electric units 10 and the optical unit 20 and the outer side. The tape, inner protective material, armor steel wire and outer coating material are respectively wrapped on the outer side of the combined entirety of the electric units 10, the optical unit 20 and the fillers 30 to form the submarine cable.

It should be noted that the submarine cable provided by the embodiments of the present application can be manufactured by the submarine cable manufacturing method and device provided by the embodiments of the present application. The submarine cable manufacturing method is implemented by using the submarine cable manufacturing device.

## Claims

1. A submarine cable manufacturing device, comprising a machine set for monofilament drawing (1), a machine set for water-blocking conductor twisting (2), a machine set for three-layer co-extrusion (3), a machine set for semi-conductive wrapping (4), a machine set for metal shielding wrapping (5), a machine set for optical fiber compositing and cabling (7), and a machine set for continuous production of aluminum-plastic composite tapes and sheaths (6);
wherein the machine set for monofilament drawing (1) and the machine set for water-blocking conductor twisting (2) are configured to produce a water-blocking conductor (11) of a submarine cable; the machine set for three-layer co-extrusion (3) is configured to form a conductor shielding layer (12), an insulating layer (13) and an insulation shielding layer (14) outside the water-blocking conductor (11); the machine set for semi-conductive wrapping (4) and the machine set for metal shielding wrapping (5) are configured to sequentially generate a first semi-conductive water-blocking tape wrapping layer (15), a metal shielding layer (16) and a second semi-conductive water-blocking tape wrapping layer (17) outside the insulation shielding layer (14);
the machine set for continuous production of aluminum-plastic composite tapes and sheaths (6) comprises a first tape dispenser (61), a second tape dispenser (62), a welding machine (64) and a tape storage machine (63), wherein the first tape dispenser (61) is provided with a first aluminum-plastic composite tape (611), and the second tape dispenser (62) is provided with a second aluminum-plastic composite tape (621); the tape storage machine (63) is configured to store the first aluminum-plastic composite tape (611) with a predetermined length in a tape changing process of the first tape dispenser (61), and the welding machine (64) is configured to weld and connect the first aluminum-plastic composite tape (611) with the predetermined length with the second aluminum-plastic composite tape (621) in a tape connection process of the second tape dispenser (62);
the machine set for optical fiber compositing and cabling (7) is configured to form the submarine cable;
the machine set for continuous production of aluminum-plastic composite tapes and sheaths (6) further comprises a longitudinal wrapping machine (65), an extruder (66), a cooling water tank (67), a tractor (68) and a take-up frame (69);
the longitudinal wrapping machine (65) is configured to synchronously form an aluminum-plastic composite tape layer (18) outside the second semi-conductive water-blocking tape wrapping layer (17); the extruder (66) is configured to synchronously extrude a sheath layer (19) after the longitudinal wrapping machine (65); the cooling water tank (67) is configured to cool the sheath layer (19); the tractor (68) is configured to tow the water-blocking conductor (11) with the aluminum-plastic composite tape layer (18) and the sheath layer (19) to the take-up frame (69);
the cooling water tank (67) comprises four water tanks, wherein the four water tanks are configured to sequentially cool the sheath layer (19), and temperatures of the four water tanks are 50-60°C, 35~45°C, 20~30°C and 5~15°C, respectively;
the tape storage machine (63) comprises tape storage wheels (631), a tape storage box (632), and tension wheels (633), wherein the tape storage box (632) is provided with an accommodating cavity; the tape storage wheels (631) are installed close to an end of the tape storage box (632) at which the first aluminum-plastic composite tape (611) enters the tape storage box (632); the tension wheels (633) are installed close to an end of the tape storage box (632) at which the first aluminum-plastic composite tape (611) leaves the tape storage box (632); the tape storage wheels (631) are configured to store the first aluminum-plastic composite tape (611) with the predetermined length in the accommodating cavity in the tape changing process of the first tape dispenser (61), and the tension wheels (633) are configured to provide the first aluminum-plastic composite tape (611) to the longitudinal wrapping machine (65) in the tape changing process of the first tape dispenser (61).

2. The submarine cable manufacturing device according to claim 1, wherein the first tape dispenser (61) comprises a first fixing table (612), a first tape reel (613) and a first magnetic powder brake (614), wherein the first tape reel (613) is rotatably installed on the first fixing table (612), and the first magnetic powder brake (614) is disposed on the first fixing table (612); the first magnetic powder brake (614) is connected with the first tape reel (613), and the first aluminum-plastic composite tape (611) is wrapped around the first tape reel (613); and the first magnetic powder brake (614) is configured to make the first aluminum-plastic composite tape (611) maintain a predetermined tension after being released;
the second tape dispenser (62) comprises a second fixing table (622), a second tape reel (623) and a second magnetic powder brake (624), wherein the second tape reel (623) is rotatably installed on the second fixing table (622), and the second magnetic powder brake (624) is disposed on the second fixing table (622); the second magnetic powder brake (624) is connected with the second tape reel (623), and the second aluminum-plastic composite tape (621) is wrapped around the second tape reel (623); and the second magnetic powder brake (624) is configured to make the second aluminum-plastic composite tape (621) maintain a predetermined tension after being released.

3. The submarine cable manufacturing device according to claim 2, wherein the first tape dispenser (61) further comprises a first guide wheel (615) and a first guide wheel holder (616), wherein the first guide wheel holder (616) is fixed on the first fixing table (612), and the first guide wheel (615) is installed on the first guide wheel holder (616); the first guide wheel (615) is located in a releasing direction of the first aluminum-plastic composite tape (611), and the first guide wheel (615) is configured to make the first aluminum-plastic composite tape (611) be positioned below the water-blocking conductor (11) with the second semi-conductive water-blocking tape wrapping layer (17) after being released;
the second tape dispenser (62) further comprises a second guide wheel (625) and a second guide wheel holder (626), wherein the second guide wheel holder (626) is fixed on the second fixing table (622), and the second guide wheel (625) is installed on the second guide wheel holder (626); the second guide wheel (625) is located in a releasing direction of the second aluminum-plastic composite tape (621), and the second guide wheel (625) is configured to make the second aluminum-plastic composite tape (621) be positioned below the water-blocking conductor (11) with the second semi-conductive water-blocking tape wrapping layer (17) after being released.

4. The submarine cable manufacturing device according to claim 1, wherein the longitudinal wrapping machine (65) comprises a longitudinal wrapping platform (651), a longitudinal wrapping mold (652) and a hot melt adhesive machine (653), wherein the longitudinal wrapping mold (652) is fixed on the longitudinal wrapping platform (651), the first aluminum-plastic composite tape (611) or the second aluminum-plastic composite tape (621) is threaded into the longitudinal wrapping mold (652), and the hot melt adhesive machine (653) is disposed at an exit of the longitudinal wrapping mold (652).

5. The submarine cable manufacturing device according to claim 4, wherein the longitudinal wrapping machine (65) further comprises a tape-guiding wheel (654) and a cable-guiding wheel (655), wherein the tape-guiding wheel (654) and the cable-guiding wheel (655) are fixed on the longitudinal wrapping platform (651), and are located at an entrance of the longitudinal wrapping mold (652), wherein the tape-guiding wheel (654) is configured to make the first aluminum-plastic composite tape (611) or the second aluminum-plastic composite tape (621) extend in an extension direction of the longitudinal wrapping mold (652), and the cable-guiding wheel (655) is configured to make the water-blocking conductor (11) with the second semi-conductive water-blocking tape wrapping layer (17) extend in the extension direction of the longitudinal wrapping mold (652).

6. The submarine cable manufacturing device according to claim 1, wherein the tape storage machine (63) further comprises an adjusting rod (634), wherein the adjusting rod (634) is disposed in the accommodating cavity, and the adjusting rod (634) is configured to adjust a distance between two side plates of the tape storage box (632) in a width direction of the first aluminum-plastic composite tape (611).

7. The submarine cable manufacturing device according to claim 1, wherein the machine set for metal shielding wrapping (5) comprises a metal wire frame twisting machine (51), wherein the metal wire frame twisting machine (51) comprises a metal wire frame twisting machine body (511), a metal wire forming mold (512) and a metal wire uniform distribution assembly (513); the metal wire uniform distribution assembly (513) is located between the metal wire frame twisting machine body (511) and the metal wire forming mold (512), the metal wire uniform distribution assembly (513) is fixed on the metal wire frame twisting machine body (511), and the metal wire uniform distribution assembly (513) is configured to uniformly distribute a plurality of metal wires in a circumferential direction;
the metal wire uniform distribution assembly (513) comprises threading modules (5131), a circular wire distribution disc (5132) and oil-free bushings (5133);
the number of the threading modules (5131) is set corresponding to the number of the metal wires, wherein each threading module (5131) is provided with a threading hole (5143) for a metal wire to pass through, each threading hole (5143) is provided with an embedded oil-free bushing (5133), and the threading modules (5131) are uniformly fixed on the circular wire distribution disc (5132) along a circular direction of the circular wire distribution disc (5132).

8. A submarine cable manufacturing method, comprising the following steps:
forming (S100) a water-blocking conductor;
forming (S200) the water-blocking conductor with a conductor shielding layer, an insulating layer and an insulation shielding layer;
forming (S300) the water-blocking conductor with a first semi-conductive water-blocking tape wrapping layer, a metal shielding layer and a second semi-conductive water-blocking tape wrapping layer;
forming (S400) the water-blocking conductor with an aluminum-plastic composite tape layer and a sheath layer;
forming (S500) a submarine cable;
wherein the manufacturing method is implemented by the submarine cable manufacturing device according to any one of claims 1-7.

9. The submarine cable manufacturing method according to claim 8, wherein the water-blocking conductor is formed by twisting a semi-conductive water-blocking tape and a plurality of soft copper wires, and cross-sectional area of the water-blocking conductor is 50~500mm².

10. The submarine cable manufacturing method according to claim 8, wherein the first semi-conductive water-blocking tape wrapping layer and the second semi-conductive water-blocking tape wrapping layer are both composed of a single-layer overlapping wrapping semi-conductive water-blocking layer, wherein a wrapping direction of the first semi-conductive water-blocking tape wrapping layer and a wrapping direction of the second semi-conductive water-blocking tape wrapping layer are the same, a thicknesses of the first semi-conductive water-blocking tape wrapping layer and a thicknesses of the second semi-conductive water-blocking tape wrapping layer are both 0.5~1mm, and a covering rate of the first semi-conductive water-blocking tape wrapping layer and a covering rate of the second semi-conductive water-blocking tape wrapping layer are both not less than 20%.

11. The submarine cable manufacturing method according to claim 10, wherein the metal shielding layer comprising a metal wire shielding layer and a metal tape shielding layer, wherein the metal wire shielding layer adopts a metal wire wrapped around an outer side of the first semi-conductive water-blocking tape wrapping layer, and the metal tape shielding layer adopts a metal tape wrapped around an outer side of the metal wire shielding layer with a gap;
a wrapping direction of the metal wire shielding layer is the same as a wrapping direction of the metal tape shielding layer, and the wrapping direction of the metal wire shielding layer is opposite to the wrapping direction of the first semi-conductive water-blocking wrapping tape; a winding pitch of the metal wire shielding layer is 10~12 times of an outer diameter of a cable core of the submarine cable, and a gap width of the metal tape shielding layer is 2~5 times of a width of the metal tape.

12. The submarine cable manufacturing method according to claim 8, wherein the sheath layer comprises an insulating polyethylene sheath layer and a semi-conductive polyethylene sheath layer, wherein the insulating polyethylene sheath layer is extruded outside the aluminum-plastic composite tape layer, and the semi-conductive polyethylene sheath layer is extruded outside the insulating polyethylene sheath layer, wherein a thickness of the semi-conductive polyethylene sheath layer is 0.5~1mm.

## Patentansprüche

1. Unterseekabel-Herstellungseinrichtung, die einen Maschinensatz zum Monofilamentziehen (1), einen Maschinensatz zum Verdrillen eines wasserblockierenden Leiters (2), einen Maschinensatz zum Dreilagen-Koextrudieren (3), einen Maschinensatz zum Halbleiterwickeln (4), einen Maschinensatz zum Metallabschirmungswickeln (5), einen Maschinensatz zum Lichtwellenleiter-Verbinden und -Verkabeln (7) und einen Maschinensatz zum kontinuierlichen Herstellen von Aluminium-Kunststoff-Verbundwerkstoffbändern und - mänteln (6) umfasst,
wobei der Maschinensatz zum Monofilamentziehen (1) und der Maschinensatz zum Verdrillen eines wasserblockierenden Leiters (2) dafür konfiguriert sind, einen wasserblockierenden Leiter (11) eines Unterseekabels herzustellen, der Maschinensatz zum Dreilagen-Koextrudieren (3) dafür konfiguriert ist, eine Leiterabschirmungslage (12), eine Isolierungslage (13) und eine Isolierungsabschirmungslage (14) außerhalb des wasserblockierenden Leiters (11) herzustellen, der Maschinensatz zum Halbleiterwickeln (4) und der Maschinensatz zum Metallabschirmungswickeln (5) dafür konfiguriert sind, aufeinanderfolgend eine erste halbleitende wasserblockierende Bandwicklungslage (15), eine Metallabschirmungslage (16) und eine zweite halbleitende wasserblockierende Bandwicklungslage (17) außerhalb der Isolierungsabschirmungslage (14) zu erzeugen,
der Maschinensatz zum kontinuierlichen Herstellen von Aluminium-Kunststoff-Verbundwerkstoffbändern und - mänteln (6) einen ersten Bandabroller (61), einen zweiten Bandabroller (62), eine Schweißmaschine (64) und eine Bandspeichermaschine (63) umfasst, wobei der erste Bandabroller (61) mit einem ersten Aluminium-Kunststoff-Verbundwerkstoffband (611) versehen ist und der zweite Bandabroller (62) mit einem zweiten Aluminium-Kunststoff-Verbundwerkstoffband (621) versehen ist, die Bandspeichermaschine (63) dafür konfiguriert ist, in einem Bandwechselprozess des ersten Bandabrollers (61) das erste Aluminium-Kunststoff-Verbundwerkstoffband (611) mit einer vorbestimmten Länge zu speichern, und die Schweißmaschine (64) dafür konfiguriert ist, in einem Bandverbindungsprozess des zweiten Bandabrollers (62) das erste Aluminium-Kunststoff-Verbundwerkstoffband (611) mit der vorbestimmten Länge mit dem zweiten Aluminium-Kunststoff-Verbundwerkstoffband (621) zu verschweißen und zu verbinden,
der Maschinensatz zum Lichtwellenleiter-Verbinden und -Verkabeln (7) dafür konfiguriert ist, das Unterseekabel zu bilden,
der Maschinensatz zum kontinuierlichen Herstellen von Aluminium-Kunststoff-Verbundwerkstoffbändern und - mänteln (6) ferner eine Längswickelmaschine (65), einen Extruder (66), einen Kühlwassertank (67), eine Zugvorrichtung (68) und ein Aufwickelgestell (69) umfasst,
die Längswickelmaschine (65) dafür konfiguriert ist, synchron eine Aluminium-Kunststoff-Verbundwerkstoffbandlage (18) außerhalb der zweiten halbleitenden wasserblockierenden Bandwicklungslage (17) zu bilden, der Extruder (66) dafür konfiguriert ist, nach der Längswickelmaschine (65) synchron eine Mantellage (19) zu extrudieren, der Kühlwassertank (67) dafür konfiguriert ist, die Mantellage (19) zu kühlen, die Zugvorrichtung (68) dafür konfiguriert ist, den wasserblockierenden Leiter (11) mit der Aluminium-Kunststoff-Verbundwerkstoffbandlage (18) und der Mantellage (19) zu dem Aufwickelgestell (69) zu ziehen,
der Kühlwassertank (67) vier Wassertanks umfasst, wobei die vier Wassertanks dafür konfiguriert sind, aufeinanderfolgend die Mantellage (19) zu kühlen, und die Temperaturen der vier Wassertanks jeweils 50~60 °C, 35~45 °C, 20~30 °C beziehungsweise 5~15 °C betragen,
die Bandspeichermaschine (63) Bandspeicherräder (631), einen Bandspeicherkasten (632) und Spannräder (633) umfasst, wobei der Bandspeicherkasten (632) mit einem Aufnahmehohlraum versehen ist, die Bandspeicherräder (631) nahe einem Ende des Bandspeicherkastens (632) installiert sind, an dem das erste Aluminium-Kunststoff-Verbundwerkstoffband (611) in den Bandspeicherkasten (632) eintritt, die Spannräder (633) nahe einem Ende des Bandspeicherkastens (632) installiert sind, an dem das erste Aluminium-Kunststoff-Verbundwerkstoffband (611) den Bandspeicherkasten (632) verlässt, die Bandspeicherräder (631) dafür konfiguriert sind, in dem Bandwechselprozess des ersten Bandabrollers (61) das erste Aluminium-Kunststoff-Verbundwerkstoffband (611) mit der vorbestimmten Länge zu speichern, und die Spannräder (633) dafür konfiguriert sind, in dem Bandwechselprozess des ersten Bandabrollers (61) das erste Aluminium-Kunststoff-Verbundwerkstoffband (611) für die Längswickelmaschine (65) bereitzustellen.

2. Unterseekabel-Herstellungseinrichtung nach Anspruch 1, wobei der erste Bandabroller (61) einen ersten Fixiertisch (612), eine erste Bandspule (613) und eine erste Magnetpulverbremse (614) umfasst, wobei die erste Bandspule (613) drehbar an dem ersten Fixiertisch (612) installiert ist und die erste Magnetpulverbremse (614) an dem ersten Fixiertisch (612) angeordnet ist, die erste Magnetpulverbremse (614) mit der ersten Bandspule (613) verbunden ist und das erste Aluminium-Kunststoff-Verbundwerkstoffband (611) um die erste Bandspule (613) gewickelt ist und die erste Magnetpulverbremse (614) dafür konfiguriert ist, zu bewirken, dass das erste Aluminium-Kunststoff-Verbundwerkstoffband (611) eine vorbestimmte Spannung aufrechterhält, nachdem es freigegeben ist,
der zweite Bandabroller (62) einen zweiten Fixiertisch (622), eine zweite Bandspule (623) und eine zweite Magnetpulverbremse (624) umfasst, wobei die zweite Bandspule (623) drehbar an dem zweiten Fixiertisch (622) installiert ist und die zweite Magnetpulverbremse (624) an dem zweiten Fixiertisch (622) angeordnet ist, die zweite Magnetpulverbremse (624) mit der zweiten Bandspule (623) verbunden ist und das zweite Aluminium-Kunststoff-Verbundwerkstoffband (621) um die zweite Bandspule (623) gewickelt ist und die zweite Magnetpulverbremse (624) dafür konfiguriert ist, zu bewirken, dass das zweite Aluminium-Kunststoff-Verbundwerkstoffband (621) eine vorbestimmte Spannung aufrechterhält, nachdem es freigegeben ist.

3. Unterseekabel-Herstellungseinrichtung nach Anspruch 2, wobei der erste Bandabroller (61) ferner ein erstes Führungsrad (615) und eine erste Führungsradhalterung (616) umfasst, wobei die erste Führungsradhalterung (616) an dem ersten Fixiertisch (612) befestigt ist und das erste Führungsrad (615) an der ersten Führungsradhalterung (616) installiert ist, sich das erste Führungsrad (615) in einer Freigaberichtung des ersten Aluminium-Kunststoff-Verbundwerkstoffbandes (611) befindet und das erste Führungsrad (615) dafür konfiguriert ist, zu bewirken, dass das erste Aluminium-Kunststoff-Verbundwerkstoffband (611) unterhalb des wasserblockierenden Leiters (11) mit der zweiten halbleitenden wasserblockierenden Bandwicklungslage (17) positioniert ist, nachdem es freigegeben ist,
der zweite Bandabroller (62) ferner ein zweites Führungsrad (625) und eine zweite Führungsradhalterung (626) umfasst, wobei die zweite Führungsradhalterung (626) an dem zweiten Fixiertisch (622) befestigt ist und das zweite Führungsrad (625) an der zweiten Führungsradhalterung (626) installiert ist, sich das zweite Führungsrad (625) in einer Freigaberichtung des zweiten Aluminium-Kunststoff-Verbundwerkstoffbandes (621) befindet und das zweite Führungsrad (625) dafür konfiguriert ist, zu bewirken, dass das zweite Aluminium-Kunststoff-Verbundwerkstoffband (621) unterhalb des wasserblockierenden Leiters (11) mit der zweiten halbleitenden wasserblockierenden Bandwicklungslage (17) positioniert ist, nachdem es freigegeben ist.

4. Unterseekabel-Herstellungseinrichtung nach Anspruch 1, wobei die Längswickelmaschine (65) eine Längswickelplattform (651), eine Längswickelform (652) und eine Heißschmelzkleber-Maschine (653) umfasst, wobei die Längswickelform (652) an der Längswickelplattform (651) befestigt ist, das erste Aluminium-Kunststoff-Verbundwerkstoffband (611) oder das zweite Aluminium-Kunststoff-Verbundwerkstoffband (621) in die Längswickelform (652) gefädelt ist und die Heißschmelzkleber-Maschine (653) an einem Ausgang der Längswickelform (652) angeordnet ist.

5. Unterseekabel-Herstellungseinrichtung nach Anspruch 4, wobei die Längswickelmaschine (65) ferner ein Bandführungsrad (654) und ein Kabelführungsrad (655) umfasst, wobei das Bandführungsrad (654) und das Kabelführungsrad (655) an der Längswickelplattform (651) befestigt sind und sich an einem Eingang der Längswickelform (652) befinden, wobei das Bandführungsrad (654) dafür konfiguriert ist, zu bewirken, dass sich das erste Aluminium-Kunststoff-Verbundwerkstoffband (611) oder das zweite Aluminium-Kunststoff-Verbundwerkstoffband (621) in einer Ausdehnungsrichtung der Längswickelform (652) erstreckt, und das Kabelführungsrad (655) dafür konfiguriert ist, zu bewirken, dass sich der wasserblockierende Leiter (11) mit der zweiten halbleitenden wasserblockierenden Bandwicklungslage (17) in der Ausdehnungsrichtung der Längswickelform (652) erstreckt.

6. Unterseekabel-Herstellungseinrichtung nach Anspruch 1, wobei die Bandspeichermaschine (63) ferner eine Einstellstange (634) umfasst, wobei die Einstellstange (634) in dem Aufnahmehohlraum angeordnet ist und die Einstellstange (634) dafür konfiguriert ist, eine Entfernung zwischen zwei Seitenplatten des Bandspeicherkastens (632) in einer Breitenrichtung des ersten Aluminium-Kunststoff-Verbundwerkstoffbandes (611) einzustellen.

7. Unterseekabel-Herstellungseinrichtung nach Anspruch 1, wobei der Maschinensatz zum Metallabschirmungswickeln (5) eine Metalldraht-Rahmenverdrillmaschine (51) umfasst, wobei die Metalldraht-Rahmenverdrillmaschine (51) ein Metalldraht-Rahmenverdrillmaschinengehäuse (511), eine Metalldraht-Formungsform (512) und eine Baugruppe zur gleichmässigen Metalldrahtverteilung (513) umfasst, wobei die Baugruppe zur gleichmässigen Metalldrahtverteilung (513) zwischen dem Metalldraht-Rahmenverdrillmaschinengehäuse (511) und der Metalldraht-Formungsform (512) angeordnet ist, die Baugruppe zur gleichmässigen Metalldrahtverteilung (513) an dem Metalldraht-Rahmenverdrillmaschinengehäuse (511) befestigt ist und die Baugruppe zur gleichmässigen Metalldrahtverteilung (513) dafür konfiguriert ist, eine Vielzahl von Metalldrähten gleichmässig in einer umlaufenden Richtung zu verteilen,
die Baugruppe zur gleichmäßigen Metalldrahtverteilung (513) Einfädelmodule (5131), eine kreisförmige Drahtverteilungsscheibe (5132) und ölfreie Buchsen (5133) umfasst,
die Anzahl der Einfädelmodule (5131) entsprechend der Anzahl der Metalldrähte festgesetzt ist, wobei jedes Einfädelmodul (5131) mit einem Einfädelloch (5143) versehen ist, damit ein Metalldraht hindurchpasst, jedes Einfädelloch (5143) mit einer eingebetteten ölfreien Buchse (5133) versehen ist und die Einfädelmodule (5131) entlang einer kreisförmigen Richtung der kreisförmigen Drahtverteilungsscheibe (5132) gleichmässig auf der kreisförmigen Drahtverteilungsscheibe (5132) befestigt sind.

8. Unterseekabel-Herstellungsverfahren, das die folgenden Schritte umfasst:
Bilden (S100) eines wasserblockierenden Leiters,
Bilden (S200) des wasserblockierenden Leiters mit einer Leiterabschirmungslage, einer Isolierungslage und einer Isolierungsabschirmungslage,
Bilden (S300) des wasserblockierenden Leiters mit einer ersten halbleitenden wasserblockierenden Bandwicklungslage, einer Metallabschirmungslage und einer zweiten halbleitenden wasserblockierenden Bandwicklungslage,
Bilden (S400) des wasserblockierenden Leiters mit einer Aluminium-Kunststoff-Verbundwerkstoffbandlage und einer Mantellage,
Bilden (S500) eines Unterseekabels,
wobei das Herstellungsverfahren durch die Unterseekabel-Herstellungseinrichtung nach einem der Ansprüche 1 bis 7 umgesetzt wird.

9. Unterseekabel-Herstellungsverfahren nach Anspruch 8, wobei der wasserblockierende Leiter durch Verdrillen eines halbleitenden wasserblockierenden Bandes und einer Vielzahl von weichen Kupferdrähten gebildet wird und eine Querschnittsfläche des wasserblockierenden Leiters 50~500 mm² beträgt.

10. Unterseekabel-Herstellungsverfahren nach Anspruch 8, wobei die erste halbleitende wasserblockierende Bandwicklungslage und die zweite halbleitende wasserblockierende Bandwicklungslage beide aus einer einlagigen überlappenden halbleitenden wasserblockierenden Bandwicklungslage bestehen, wobei eine Wicklungsrichtung der ersten halbleitenden wasserblockierenden Bandwicklungslage und eine Wicklungsrichtung der zweiten halbleitenden wasserblockierenden Bandwicklungslage dieselbe sind, eine Dicke der ersten halbleitenden wasserblockierenden Bandwicklungslage und eine Dicke der zweiten halbleitenden wasserblockierenden Bandwicklungslage beide 0,5~1 mm betragen und eine Abdeckungsrate der ersten halbleitenden wasserblockierenden Bandwicklungslage und eine Abdeckungsrate der zweiten halbleitenden wasserblockierenden Bandwicklungslage beide nicht weniger als 20 % betragen.

11. Unterseekabel-Herstellungsverfahren nach Anspruch 10, wobei die Metallabschirmungslage eine Metalldraht-Abschirmungslage und eine Metallband-Abschirmungslage umfasst, wobei die Metalldraht-Abschirmungslage einen Metalldraht anwendet, der um eine Außenseite der ersten halbleitenden wasserblockierenden Bandwicklungslage gewickelt wird, und die Metallband-Abschirmungslage ein Metallband anwendet, das mit einem Spalt um eine Außenseite der Metalldraht-Abschirmungslage gewickelt wird,
eine Wicklungsrichtung der Metalldraht-Abschirmungslage dieselbe ist wie eine Wicklungsrichtung der Metallband-Abschirmungslage und die Wicklungsrichtung der Metalldraht-Abschirmungslage entgegengesetzt zu der Wicklungsrichtung des ersten halbleitenden wasserblockierenden Wicklungsbandes ist, ein Wickelschritt der Metalldraht-Abschirmungslage das 10~12-Fache eines Außendurchmessers eines Kabelkerns des Unterseekabels beträgt und eine Spaltbreite der Metallband-Abschirmungslage das 2~5-Fache einer Breite des Metallbandes beträgt.

12. Unterseekabel-Herstellungsverfahren nach Anspruch 8, wobei die Mantellage eine isolierende Polyethylen-Mantellage und eine halbleitende Polyethylen-Mantellage umfasst, wobei die isolierende Polyethylen-Mantellage außerhalb der Aluminium-Kunststoff-Verbundwerkstoffbandlage extrudiert wird und die halbleitende Polyethylen-Mantellage außerhalb der isolierenden Polyethylen-Mantellage extrudiert wird, wobei eine Dicke der halbleitenden Polyethylen-Mantellage 0,5~1 mm beträgt.

## Revendications

1. Dispositif de fabrication de câble sous-marin, comprenant un ensemble de machines pour le tréfilage de monofilaments (1), un ensemble de machines pour le toronnage de conducteurs étanches à l'eau (2), un ensemble de machines pour la co-extrusion à trois couches (3), un ensemble de machines pour le rubanage semi-conducteur (4), un ensemble de machines pour le rubanage de blindage métallique (5), un ensemble de machines pour l'assemblage et le câblage de fibres optiques (7) et un ensemble de machines pour la production en continu de rubans composites aluminium-plastique et de gaines (6) ;
dans lequel l'ensemble de machines pour le tréfilage de monofilaments (1) et l'ensemble de machines pour le toronnage de conducteurs étanches à l'eau (2) sont configurés pour produire un conducteur étanche à l'eau (11) d'un câble sous-marin ; l'ensemble de machines pour la co-extrusion à trois couches (3) est configuré pour former une couche de blindage de conducteur (12), une couche isolante (13) et une couche de blindage d'isolation (14) à l'extérieur du conducteur étanche à l'eau (11) ; l'ensemble de machines pour le rubanage semi-conducteur (4) et l'ensemble de machines pour le rubanage de blindage métallique (5) sont configurés pour générer successivement une première couche de rubanage en ruban semi-conducteur étanche à l'eau (15), une couche de blindage métallique (16) et une deuxième couche de rubanage en ruban semi-conducteur étanche à l'eau (17) à l'extérieur de la couche de blindage d'isolation (14) ;
l'ensemble de machines pour la production en continu de rubans composites aluminium-plastique et de gaines (6) comprend un premier distributeur de ruban (61), un deuxième distributeur de ruban (62), une machine de soudage (64) et une machine de stockage de ruban (63), dans lequel le premier distributeur de ruban (61) est pourvu d'un premier ruban composite aluminium-plastique (611) et le deuxième distributeur de ruban (62) est pourvu d'un deuxième ruban composite aluminium-plastique (621) ; la machine de stockage de ruban (63) est configurée pour stocker le premier ruban composite aluminium-plastique (611) d'une longueur prédéterminée lors d'un processus de changement de ruban du premier distributeur de ruban (61) et la machine de soudage (64) est configurée pour souder et raccorder le premier ruban composite aluminium-plastique (611) de la longueur prédéterminée au deuxième ruban composite aluminium-plastique (621) lors d'un processus de raccordement de ruban du deuxième distributeur de ruban (62) ;
l'ensemble de machines pour l'assemblage et le câblage de fibres optiques (7) est configuré pour former le câble sous-marin ;
l'ensemble de machines pour la production en continu de rubans composites aluminium-plastique et de gaines (6) comprend en outre une machine de rubanage longitudinal (65), une extrudeuse (66), un réservoir d'eau de refroidissement (67), un dispositif de traction (68) et un châssis de réception (69) ;
la machine de rubanage longitudinal (65) est configurée pour former de manière synchrone une couche de ruban composite aluminium-plastique (18) à l'extérieur de la deuxième couche de rubanage en ruban semi-conducteur étanche à l'eau (17); l'extrudeuse (66) est configurée pour extruder de manière synchrone une couche de gaine (19) en aval de la machine de rubanage longitudinal (65) ; le réservoir d'eau de refroidissement (67) est configuré pour refroidir la couche de gaine (19) ; le dispositif de traction (68) est configuré pour tirer le conducteur étanche à l'eau (11), muni de la couche de ruban composite aluminium-plastique (18) et de la couche de gaine (19), vers le châssis de réception (69) ;
le réservoir d'eau de refroidissement (67) comprend quatre bacs d'eau, dans lequel les quatre bacs d'eau sont configurés pour refroidir successivement la couche de gaine (19) et les températures des quatre bacs d'eau sont respectivement de 50~60 °C, 35~45 °C, 20~30 °C et 5~15 °C ;
la machine de stockage de ruban (63) comprend des roues de stockage de ruban (631), un boîtier de stockage de ruban (632) et des roues de tension (633), dans lequel le boîtier de stockage de ruban (632) est pourvu d'une cavité de logement ; les roues de stockage de ruban (631) sont installées à proximité d'une extrémité du boîtier de stockage de ruban (632) à laquelle le premier ruban composite aluminium-plastique (611) pénètre dans le boîtier de stockage de ruban (632) ; les roues de tension (633) sont installées à proximité d'une extrémité du boîtier de stockage de ruban (632) à laquelle le premier ruban composite aluminium-plastique (611) sort du boîtier de stockage de ruban (632) ; les roues de stockage de ruban (631) sont configurées pour stocker le premier ruban composite aluminium-plastique (611) de la longueur prédéterminée dans la cavité de logement lors du processus de changement de ruban du premier distributeur de ruban (61) et les roues de tension (633) sont configurées pour fournir le premier ruban composite aluminium-plastique (611) à la machine de rubanage longitudinal (65) lors du processus de changement de ruban du premier distributeur de ruban (61).

2. Dispositif de fabrication de câble sous-marin selon la revendication 1, dans lequel le premier distributeur de ruban (61) comprend une première table de fixation (612), une première bobine de ruban (613) et un premier frein à poudre magnétique (614), dans lequel la première bobine de ruban (613) est installée de manière rotative sur la première table de fixation (612) et le premier frein à poudre magnétique (614) est disposé sur la première table de fixation (612) ; le premier frein à poudre magnétique (614) est raccordé à la première bobine de ruban (613) et
le premier ruban composite aluminium-plastique (611) est enroulé autour de la première bobine de ruban (613) ; et le premier frein à poudre magnétique (614) est configuré pour maintenir le premier ruban composite aluminium-plastique (611) sous une tension prédéterminée après avoir été déroulé ;
le deuxième distributeur de ruban (62) comprend une deuxième table de fixation (622), une deuxième bobine de ruban (623) et un deuxième frein à poudre magnétique (624), dans lequel la deuxième bobine de ruban (623) est installée de manière rotative sur la deuxième table de fixation (622) et le deuxième frein à poudre magnétique (624) est disposé sur la deuxième table de fixation (622) ; le deuxième frein à poudre magnétique (624) est raccordé à la deuxième bobine de ruban (623) et le deuxième ruban composite aluminium-plastique (621) est enroulé autour de la deuxième bobine de ruban (623) ; et le deuxième frein à poudre magnétique (624) est configuré pour amener le deuxième ruban composite aluminium-plastique (621) à maintenir une tension prédéterminée après avoir été déroulé.

3. Dispositif de fabrication de câble sous-marin selon la revendication 2, dans lequel le premier distributeur de ruban (61) comprend en outre une première roue de guidage (615) et un premier support de roue de guidage (616), dans lequel le premier support de roue de guidage (616) est fixé sur la première table de fixation (612) et la première roue de guidage (615) est installée sur le premier support de roue de guidage (616) ; la première roue de guidage (615) est située dans une direction de déroulement du premier ruban composite aluminium-plastique (611) et la première roue de guidage (615) est configurée pour amener le premier ruban composite aluminium-plastique (611) à se positionner sous le conducteur étanche à l'eau (11) comportant la deuxième couche de rubanage en ruban semi-conducteur étanche à l'eau (17) après avoir été déroulé ;
le deuxième distributeur de ruban (62) comprend en outre une deuxième roue de guidage (625) et un deuxième support de roue de guidage (626), dans lequel le deuxième support de roue de guidage (626) est fixé sur la deuxième table de fixation (622) et la deuxième roue de guidage (625) est installée sur le deuxième support de roue de guidage (626) ; la deuxième roue de guidage (625) est située dans une direction de déroulement du deuxième ruban composite aluminium-plastique (621) et la deuxième roue de guidage (625) est configurée pour positionner le deuxième ruban composite aluminium-plastique (621) sous le conducteur étanche à l'eau (11) muni de la deuxième couche de rubanage en ruban semi-conducteur étanche à l'eau (17) après son déroulement.

4. Dispositif de fabrication de câble sous-marin selon la revendication 1, dans lequel la machine de rubanage longitudinal (65) comprend une plateforme de rubanage longitudinal (651), un moule de rubanage longitudinal (652) et une machine à adhésif thermofusible (653), dans lequel le moule de rubanage longitudinal (652) est fixé sur la plateforme de rubanage longitudinal (651), le premier ruban composite aluminium-plastique (611) ou le deuxième ruban composite aluminium-plastique (621) est introduit dans le moule de rubanage longitudinal (652) et la machine à adhésif thermofusible (653) est disposée à une sortie du moule de rubanage longitudinal (652).

5. Dispositif de fabrication de câble sous-marin selon la revendication 4, dans lequel la machine de rubanage longitudinal (65) comprend en outre une roue de guidage de ruban (654) et une roue de guidage de câble (655), dans lequel la roue de guidage de ruban (654) et la roue de guidage de câble (655) sont fixées sur la plateforme de rubanage longitudinal (651) et situées à une entrée du moule de rubanage longitudinal (652), dans lequel la roue de guidage de ruban (654) est configurée pour amener le premier ruban composite aluminium-plastique (611) ou le deuxième ruban composite aluminium-plastique (621) à s'étendre dans une direction d'extension du moule de rubanage longitudinal (652) et la roue de guidage de câble (655) est configurée pour amener le conducteur étanche à l'eau (11), muni de la deuxième couche de rubanage en ruban semi-conducteur étanche à l'eau (17), à s'étendre dans la direction d'extension du moule de rubanage longitudinal (652).

6. Dispositif de fabrication de câble sous-marin selon la revendication 1, dans lequel la machine de stockage de ruban (63) comprend en outre une tige de réglage (634), dans lequel la tige de réglage (634) est disposée dans la cavité de logement et la tige de réglage (634) est configurée pour régler une distance entre deux plaques latérales du boîtier de stockage de ruban (632) dans une direction de largeur du premier ruban composite aluminium-plastique (611).

7. Dispositif de fabrication de câble sous-marin selon la revendication 1, dans lequel l'ensemble de machines pour le rubanage de blindage métallique (5) comprend une machine de toronnage d'armature en fils métalliques (51), dans lequel la machine de toronnage d'armature en fils métalliques (51) comprend un corps de machine de toronnage d'armature en fils métalliques (511), un moule de formage de fils métalliques (512) et un ensemble de répartition uniforme de fils métalliques (513) ; l'ensemble de répartition uniforme de fils métalliques (513) est situé entre le corps de la machine de toronnage d'armature en fils métalliques (511) et le moule de formage des fils métalliques (512), l'ensemble de répartition uniforme des fils métalliques (513) est fixé sur le corps de la machine de toronnage d'armature en fils métalliques (511) et l'ensemble de répartition uniforme des fils métalliques (513) est configuré pour répartir uniformément une pluralité de fils métalliques dans une direction circonférentielle ;
l'ensemble de répartition uniforme des fils métalliques (513) comprend des modules d'enfilage (5131), un disque circulaire de répartition des fils (5132) et des douilles sans huile (5133) ;
le nombre de modules d'enfilage (5131) est déterminé en fonction du nombre de fils métalliques, dans lequel chaque module d'enfilage (5131) est pourvu d'un trou d'enfilage (5143) permettant le passage d'un fil métallique, chaque trou d'enfilage (5143) est équipé d'une douille intégrée sans huile (5133) et les modules d'enfilage (5131) sont fixés de manière uniforme sur le disque circulaire de répartition des fils (5132) le long d'une direction circulaire du disque circulaire de répartition des fils (5132).

8. Procédé de fabrication de câble sous-marin, comprenant les étapes suivantes :
la formation (S100) d'un conducteur étanche à l'eau ;
la formation (S200) du conducteur étanche à l'eau avec une couche de blindage de conducteur, une couche isolante et une couche de blindage d'isolation ;
la formation (S300) du conducteur étanche à l'eau avec une première couche de rubanage en ruban semi-conducteur étanche à l'eau, une couche de blindage métallique et une deuxième couche de rubanage en ruban semi-conducteur étanche à l'eau ;
la formation (S400) du conducteur étanche à l'eau avec une couche de ruban composite aluminium-plastique et une couche de gaine ;
la formation (S500) d'un câble sous-marin ;
dans lequel le procédé de fabrication est mis en œuvre par le dispositif de fabrication de câble sous-marin selon l'une quelconque des revendications 1 à 7.

9. Procédé de fabrication de câble sous-marin selon la revendication 8, dans lequel le conducteur étanche à l'eau est formé par le toronnage d'un ruban semi-conducteur étanche à l'eau et d'une pluralité de fils de cuivre souples et la section transversale du conducteur étanche à l'eau est comprise entre 50 et 500 mm².

10. Procédé de fabrication de câble sous-marin selon la revendication 8, dans lequel la première couche de rubanage en ruban semi-conducteur étanche à l'eau et la deuxième couche de rubanage en ruban semi-conducteur étanche à l'eau sont toutes deux constituées d'une couche semi-conductrice étanche à l'eau formée par un rubanage monocouche à chevauchement, dans lequel une direction de rubanage de la première couche de rubanage en ruban semi-conducteur étanche à l'eau et une direction de rubanage de la deuxième couche de rubanage en ruban semi-conducteur étanche à l'eau sont identiques, une épaisseur de la première couche de rubanage en ruban semi-conducteur étanche à l'eau et une épaisseur de la deuxième couche de rubanage en ruban semi-conducteur étanche à l'eau sont toutes deux comprises entre 0,5 et 1 mm et un taux de recouvrement de la première couche de rubanage en ruban semi-conducteur étanche à l'eau et un taux de recouvrement de la deuxième couche de rubanage en ruban semi-conducteur étanche à l'eau sont tous deux supérieurs ou égaux à 20 %.

11. Procédé de fabrication de câble sous-marin selon la revendication 10, dans lequel la couche de blindage métallique comprend une couche de blindage en fils métalliques et une couche de blindage en ruban métallique,
dans lequel la couche de blindage en fils métalliques utilise un fil métallique enroulé autour d'une face extérieure de la première couche de rubanage en ruban semi-conducteur étanche à l'eau et la couche de blindage en ruban métallique utilise un ruban métallique enroulé autour d'une face extérieure de la couche de blindage en fils métalliques avec un espacement ;
une direction de rubanage de la couche de blindage en fils métalliques est identique à une direction de rubanage de la couche de blindage en ruban métallique et la direction de rubanage de la couche de blindage en fils métalliques est opposée à la direction de rubanage du premier ruban semi-conducteur étanche à l'eau ; un pas de rubanage de la couche de blindage en fils métalliques est compris entre 10 et 12 fois un diamètre extérieur d'une âme du câble sous-marin et une largeur d'espacement de la couche de blindage en ruban métallique est comprise entre 2 et 5 fois une largeur du ruban métallique.

12. Procédé de fabrication de câble sous-marin selon la revendication 8, dans lequel la couche de gaine comprend une couche de gaine isolante en polyéthylène et une couche de gaine semi-conductrice en polyéthylène, dans lequel la couche de gaine isolante en polyéthylène est extrudée à l'extérieur de la couche de ruban composite aluminium-plastique et la couche de gaine semi-conductrice en polyéthylène est extrudée à l'extérieur de la couche de gaine isolante en polyéthylène, dans lequel une épaisseur de la couche de gaine semi-conductrice en polyéthylène est comprise entre 0,5 et 1 mm.
